(19) Europäisches Patentamt / European Patent Office / Office européen des brevets

(11) **EP 3 271 435 B1**

(12) **EUROPÄISCHE PATENTSCHRIFT**

(45) Veröffentlichungstag und Bekanntmachung des Hinweises auf die Patenterteilung:
**09.06.2021   Patentblatt 2021/23**

(21) Anmeldenummer: **16712296.9**

(22) Anmeldetag: **17.03.2016**

(51) Int Cl.:
*C09J 7/00* *(2018.01)*          *B82Y 40/00* *(2011.01)*
*B29C 37/00* *(2006.01)*          *B32B 7/04* *(2019.01)*
*A44B 18/00* *(2006.01)*          *B29C 39/02* *(2006.01)*

(86) Internationale Anmeldenummer:
**PCT/EP2016/055894**

(87) Internationale Veröffentlichungsnummer:
**WO 2016/146792 (22.09.2016 Gazette 2016/38)**

(54) **KOMPOSIT-PILLARSTRUKTUREN**

COMPOSITE PILLAR STRUCTURES

STRUCTURES DE SUPPORT COMPOSITES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.03.2015   DE 102015103965**

(43) Veröffentlichungstag der Anmeldung:
**24.01.2018   Patentblatt 2018/04**

(73) Patentinhaber: **Leibniz-Institut für Neue Materialien gemeinnützige GmbH**
**66123 Saarbrücken (DE)**

(72) Erfinder:
• **HENSEL, René**
**66128 Saarbrücken (DE)**
• **FISCHER, Sarah**
**66271 Kleinblittersdorf (DE)**
• **ARZT, Eduard**
**66123 Saarbrücken (DE)**

(74) Vertreter: **Patentanwälte Gierlich & Pischitzis Partnerschaft mbB**
**Gerbermühlstraße 11**
**60594 Frankfurt am Main (DE)**

(56) Entgegenhaltungen:
WO-A1-2007/096082          WO-A1-2009/053714
WO-A2-03/099951          DE-A1-102006 050 365
DE-A1-102009 046 756          US-A1- 2015 274 904
US-B1- 6 491 851

EP 3 271 435 B1

**Beschreibung**

Gebiet der Erfindung

Die Erfindung betrifft eine strukturierte Oberfläche mit verbesserter Adhäsion insbesondere auf rauen und/oder weichen Oberflächen sowie ein Verfahren zu ihrer Herstellung.

Stand der Technik

Die Haftorgane von einigen Arthropoden und Geckos offenbaren ein erfolgsversprechendes Konzept für temporäre, reversible Haftung. Deren fibrilläre Nano- bzw. Mikrostruktur ermöglicht die Fortbewegung durch einen gleichmäßigen adhäsiven Kontakt auf Substraten aus verschiedensten Materialien und mit verschiedensten Rauigkeiten. Diese rein physikalisch wirkenden Haftsysteme sind seit ihrer Entdeckung Gegenstand der Forschung, um artifizielle Systeme dieser Art zu generieren. Erfolgreiche Konzepte zur Nachahmung fibrillärer Haftsysteme wurden in jüngster Vergangenheit für sehr glatte und harte Substratoberflächen wie Glas-, Siliziumwafer- oder polierte Metalloberflächen anhand elastomerer Mikrostrukturen demonstriert. Weniger erfolgreich ist bisher jedoch die Umsetzung solcher Haftmechanismen auf rauen und nachgiebigen Oberflächen, obwohl diese in der Natur keine Seltenheit sind und für Arthropoden bzw. Geckos kein Hindernis darstellen.

Gestaltungsparameter wie Fibrilldurchmesser, Aspektverhältnis und die geometrische Gestaltung des Kontaktpunktes können mit Hilfe von Mikrostrukturierungstechniken gezielt variiert und folglich untersucht und analysiert werden. Beispielsweise zeigte sich, dass Fibrillen mit großen Aspektverhältnissen die elastische Energie während der Ablösung besser dissipieren und sich demzufolge größere Adhäsionskräfte erzielen lassen. Große Aspektverhältnisse sind jedoch nachteilig für die mechanische Stabilität solcher Strukturen, da diese bei der Kompression eher einer Eulerschen Knickung unterliegen bzw. es auch ohne Krafteinwirkung aufgrund der verringerten Biegesteifigkeit zur Agglomeration benachbarter Fibrillen kommt.

Fibrilläre Strukturen erhöhen die elastische Flexibilität in der Kontaktfläche, wodurch sich diese rauen Substrate besser anpassen können als unstrukturierte Oberflächen des gleichen Materials. Es wurde gezeigt, dass mit zunehmender Rauigkeit die Adhäsionskraft abnimmt, aber mit einer erhöhten Nachgiebigkeit der fibrillären Strukturen diesem Effekt begegnet werden kann. Theoretisch lässt sich dies durch die Bestimmung des effektiven E-Moduls beschreiben, bei dem der intrinsische E-Modul des Feststoffs in Abhängigkeit des interpenetrierenden Luftvolumens erniedrigt wird. Am Beispiel der β-Keratin-Fibrillen des Geckos zeigte sich somit eine Reduzierung des E-Moduls über 4 Größenordnungen auf einen effektiven Elastizitätsmodul von ca. 100 kPa. Hierarchisch organisierte Fibrillstrukturen besitzen zusätzlich die Möglichkeit Rauigkeiten über mehrere Längenskalen zu begegnen, wobei jede Hierarchiestufe eine bestimmte Größenordnung abdeckt.

Trotz des enormen Zugewinns an grundlegendem Verständnis bezüglich fibrillärer Haftsysteme im letzten Jahrzehnt, beschränkt sich deren Anwendungsgebiet bisher fast ausschließlich auf harte und glatte Objekte, wie Glas-, Wafer- und polierte Metalloberflächen. Die Haftungsmechanismen solcher Systeme auf weichen, nachgiebigen Substraten mit oft viskoelastischen Eigenschaftsprofilen, wie beispielsweise Hautoberflächen, sind bisher nur sehr wenig bekannt. Neben ihrer viskoelastischen Natur ist Haut zudem unterschiedlich rau, feucht und stellt somit eine große Herausforderung für Untersuchungen dar.

Ein wichtiges Gebiet der reversiblen Haftverbindung ist die Trockenadhäsion auf der Grundlage von van-der-Waals-Kräften ähnlich den Gecko-Strukturen. Diese Strukturen sind ablösbar und können auch mehrfach verwendet werden. Problematisch ist allerdings, dass die Adhäsionskraft einer Oberfläche nur eingeschränkt beeinflusst werden kann.

Bae et al. (Bae, W.G., Kim, D., Kwak, M.K., Ha, L., Kang, S.M. & Suh, K.Y. (2013a). Enhanced skin adhesive patch with modulus-tunable composite micropillars. Adv. Healthc. Mater., 2, 109-113) konnten zeigen, dass dünne Filme auf Stirnflächen von Vorsprüngen die Adhäsion auf weichen Oberflächen wie Haut verbessern können. Allerdings wurden nur dünne Filme verwendet und nur unzureichend polymerisiert, was gerade bei der Anwendung auf Haut problematisch ist

In der WO 03/099951 A2 wird eine strukturierte Oberfläche umfassend Vorsprünge offenbart. Die Vorsprünge weisen im Bereich der Stirnfläche einen geringeren Elastizitätsmodul als im Fußteil auf. Dadurch wird eine verbesserte Adhäsionsfähigkeit auf verschiedenen Materialien und Oberflächen erzielt.

Aufgabe

Aufgabe der Erfindung ist es, eine strukturierte Oberfläche bereitzustellen, welche adhäsive Eigenschaften aufweist und die Nachteile des Stands der Technik vermeidet. Sie soll besonders für raue und weiche Oberflächen geeignet sein. Es soll außerdem ein Verfahren bereitgestellt werden, welches die Herstellung solcher strukturierter Oberflächen ermöglicht.

Lösung

Diese Aufgabe wird durch die Erfindungen mit den Merkmalen der unabhängigen Ansprüche gelöst. Vorteilhafte Weiterbildungen der Erfindungen sind in den Unteransprüchen gekennzeichnet. Der Wortlaut sämtlicher Ansprüche wird hiermit durch Bezugnahme zum Inhalt dieser Beschreibung gemacht. Die Erfindungen umfassen auch alle sinnvollen und insbesondere alle erwähnten Kombinationen von unabhängigen und/oder abhängigen Ansprüchen.

Die Aufgabe wird durch die strukturierte Oberfläche eines Festkörpers gelöst, wobei die Oberfläche eine Strukturierung aufweist, die eine Vielzahl von Vorsprüngen (Pillars) umfasst, die mindestens jeweils einen Stamm aufweisen und eine von der Oberfläche wegweisende Stirnfläche umfassen. Dabei umfasst der Stamm in Längsrichtung mindestens zwei Bereiche mit unterschiedlichem Elastizitätsmodul, wobei zwei Bereiche aneinander angrenzen und eine Phasengrenzfläche bilden.

Dabei wird unter Bereich ein Teil des Vorsprungs verstanden, welcher an mindestens einem Punkt einen vollständigen Querschnitt parallel zur Grundfläche des Vorsprungs umfasst. Bevorzugt umfasst ein Bereich bis auf Bereiche der Grenzfläche immer den gesamten Querschnitt des Vorsprungs. Einzelne Bereiche bauen dann den Vorsprung ähnlich dem Aufbau einer Säule aus unterschiedlichen Bausteinen (Bereichen), welche jeweils ein Säulensegment umfassen. Die Flächen, an denen sich die Bereiche berühren, werden als Grenzflächen angesehen. Abhängig von dem Herstellungsverfahren können die Grenzflächen auch dünne Schichten von Verbindungshilfsmitteln umfassen.

Innerhalb eines solchen Bereichs ist der Elastizitätsmodul bevorzugt konstant.

Überraschenderweise wurde nun gefunden, dass solche zusammengesetzten Vorsprünge zu einer Verbesserung der Adhäsion führen, insbesondere auf rauen und glatten Oberflächen. Auch kann durch Wahl der Geometrie der Grenzfläche, insbesondere bei gekrümmten Grenzflächen, die Adhäsion nochmal deutlich gesteigert werden, insbesondere bei vorteilhaften Verhältnissen der Elastizitätsmodule und der Ausmaße der Bereiche. So können Adhäsionen erreicht werden, welche sonst nur mit verbreiterten Stirnflächen (mushrooms) möglich waren, welche allerdings schwierig herzustellen sind und bei Verwendung von weichen Materialien zum Kollabieren neigen. Es wird angenommen, dass die Verschiebung der maximalen Spannung im Kontaktbereich vom Rand zum Zentrum hin, für die vorteilhaften Eigenschaften.

In einer bevorzugten Ausführungsform der Erfindung umfasst der Bereich mit einem geringeren Elastizitätsmodul, bevorzugt der Bereich mit dem geringsten Elastizitätsmodul, die Stirnfläche. Dies bedeutet, dass auch die Stirnfläche aus diesem Material besteht. Durch diesen Aufbau wird erreicht, dass der Stamm des Vorsprungs weniger elastisch ist als der Bereich der Stirnfläche. Der Stamm der Säule neigt daher weniger dazu zur Agglomeration mit oder ohne Belastung. Gleichzeitig ist die Stirnfläche elastischer und kann sich besser auch an raue Oberflächen anpassen.

In einer bevorzugten Ausführungsform der Erfindung ist die Phasengrenzfläche nicht parallel zur Stirnfläche des jeweiligen Vorsprungs.

In einer Ausführungsform der Erfindung ist die senkrechte Dicke des Bereichs, welcher die Stirnfläche umfasst, in Bezug auf die Phasengrenzfläche zum angrenzenden Bereich nicht konstant. Dies ist der Fall, wenn diese Phasengrenzfläche nicht parallel zur Stirnfläche ist. Als senkrechte Dicke wird dabei der Abstand in Längsrichtung des Vorsprungs zwischen Stirnfläche und Phasengrenzfläche verstanden. So kann beispielsweise die Stirnfläche gekrümmt sein und die Grenzfläche bildet eine Ebene, oder die Stirnfläche ist plan geformt und die Grenzfläche ist gekrümmt. Bevorzugt nimmt die Dicke des Bereichs zum Rand hin in jeder Richtung zu oder ab. Dies ist der Fall, wenn mindestens eine der beiden Flächen (Stirnfläche oder Phasengrenzfläche) eine Krümmung aufweist. Beide Flächen können auch unterschiedlich gekrümmt sein.

Erfindungsgemäß weist mindestens eine Phasengrenzfläche zwischen zwei Bereichen eine Krümmung auf. Bevorzugt ist eine Krümmung der Grenzfläche mit mindestens einem Minimum oder Maximum innerhalb des Vorsprungs, bevorzugt mit einem Minimum oder Maximum. Bevorzugt ist diese Phasengrenzfläche parabolisch, halbkugelförmig bis napfförmig geformt.

Als gekrümmte Grenzfläche wird insbesondere angesehen, wenn die Grenzfläche selbst keine Ebene darstellt, welche den Vorsprung schneidet. Die Grenzfläche kann dabei auch nur zum Rand hin eine Krümmung aufweisen, während sie in der Mitte des Vorsprungs eben verläuft.

Eine solche Form der Grenzfläche führt dazu, dass in diesem Abschnitt des Vorsprungs beide Materialien mit unterschiedlicher Elastizität oder Biegesteifigkeit vorliegen und ineinandergreifen. Es zeigte sich, dass eine solche Anordnung die Adhäsionskraft eines solchen Vorsprungs erhöht und auch die Neigung zum Kollabieren verringert.

Erfindungsgemäß beträgt das Verhältnis der minimalen senkrechte Dicke des Bereichs umfassend die Stirnfläche im Verhältnis zur Höhe des Vorsprungs weniger als 0,5, insbesondere weniger als 0,3, insbesondere weniger als 0,1. Dadurch wirken sich Veränderungen der senkrechten Dicke, z. B. bei gekrümmten Phasengrenzflächen, besonders stark auf die Adhäsion aus. Das optimale Verhältnis kann auch vom Verhältnis der Elastizitätsmodule, sowie der Geometrie der Grenzfläche abhängen.

Unter der senkrechten Höhe der Stirnfläche wird der Abstand der Stirnfläche zu der Oberfläche verstanden, auf der die Vorsprünge angeordnet sind.

In einer Ausführungsform der Erfindung umfasst der Bereich, welcher die Stirnfläche umfasst, nicht mehr als 50 % des Volumens des Vorsprungs, bevorzugt nicht mehr als 40 %, 30 % oder 20 % des Volumens des Vorsprungs. Bevorzugt umfasst dieser Bereich davon unabhängig mindestens 15 %, mindestens 10 %, mindestens 2 % des Volumens eines Vorsprungs. Dabei wird unter Volumen eines Vorsprungs das ausgehend von der Grundfläche und der Stirnfläche umschlossene Volumen verstanden, inklusive eventuell verbreiterter Stirnflächen.

In einer Ausführungsform der Erfindung ist die Krümmung konvex in Richtung der Stirnfläche, d.h. die Phasengrenzfläche weist ein Maximum auf. Bevorzugt ist die Krümmung eine kugelförmige Krümmung, insbesondere mit einem Radius bis zu dem doppelten Durchmesser des Vorsprungs, insbesondere mindestens dem Durchmesser des Vorsprungs.

In einer weiteren Ausführungsform der Erfindung weist der Vorsprung bei Ablösung von einer Oberfläche einen Beginn der Ablösung in der Mitte des Vorsprungs auf. Die vorteilhaften Parameter für Elastizitätsmodul, Größenverhältnis und Geometrie der Grenzfläche, insbesondere konvexe Grenzfläche, können durch Simulationen und Messungen bestimmt werden.

In einer bevorzugten Ausführungsform der Erfindung sind die Vorsprünge der strukturierten Oberfläche der Erfindung säulenartig ausgebildet. Dies bedeutet, dass es sich um bevorzugt senkrecht zur Oberfläche ausgebildete Vorsprünge handelt, welche einen Stamm und eine Stirnfläche aufweisen, wobei der Stamm und die Stirnfläche einen beliebigen Querschnitt aufweisen können (beispielsweise kreisförmig, oval, rechteckig, quadratisch, rautenförmig, sechseckig, fünfeckig, etc.).

Bevorzugt sind die Vorsprünge so ausgebildet, dass die senkrechte Projektion der Stirnfläche auf die Grundfläche des Vorsprungs mit der Grundfläche eine Überlappungsfläche bildet, wobei die Überlappungsfläche und die Projektion der Überlappungsfläche auf die Stirnfläche einen Körper aufspannt, welcher vollständig innerhalb des Vorsprungs liegt. In einer bevorzugten Ausführungsform der Erfindung umfasst die Überlappungsfläche mindestens 50 % der Grundfläche, bevorzugt mindestens 70 % der Grundfläche, besonders bevorzugt umfasst die Überlappungsfläche die gesamte Grundfläche. Die Vorsprünge sind daher bevorzugt nicht geneigt, können es aber sein.

In einer bevorzugten Ausführungsform ist die Stirnfläche parallel zur Grundfläche und zur Oberfläche ausgerichtet. Falls die Stirnflächen nicht parallel zur Oberfläche ausgerichtet sind und daher verschiedene senkrechte Höhen aufweisen, wird als senkrechte Höhe des Vorsprungs die mittlere senkrechte Höhe der Stirnfläche angesehen.

In einer Ausführungsform ist die Stirnfläche der Vorsprünge größer als die Grundfläche.

In einer bevorzugten Ausführungsform der Erfindung weist der Stamm des Vorsprungs bezogen auf seinen mittleren Durchmesser ein Aspektverhältnis von Höhe zu Durchmesser von 1 bis 100, bevorzugt von 1 bis 10, besonders bevorzugt von 2 bis 5 auf.

In einer Ausführungsform liegt das Aspektverhältnis bei mindestens 3, insbesondere bei mindestens 7, bevorzugt bei 3 bis 15, besonders bevorzugt bei 3 bis 10. Solche Vorsprünge sind insbesondere mit dem erfindungsgemäßen Verfahren erhältlich.

Unter dem mittleren Durchmesser wird dabei der Durchmesser des Kreises verstanden, der die gleiche Fläche wie der entsprechende Querschnitt des Vorsprungs aufweist, gemittelt über die gesamte Höhe des Vorsprungs.

In einer weiteren Ausführungsform der Erfindung liegt das Verhältnis der Höhe eines Vorsprungs zum Durchmesser bei einer bestimmten Höhe über die gesamte Höhe des Vorsprungs immer bei 1 bis 100, bevorzugt bei 1 bis 10, besonders bevorzugt bei 2 bis 5. In einer Ausführungsform liegt dieses Aspektverhältnis bei mindestens 3, insbesondere bei mindestens 7, bevorzugt bei 3 bis 15, besonders bevorzugt bei 3 bis 10. Dabei wird unter Durchmesser der Durchmesser des Kreises verstanden, der die gleiche Fläche wie der entsprechende Querschnitt des Vorsprungs bei der bestimmten Höhe aufweist.

Die Vorsprünge können verbreiterte Stirnflächen aufweisen, sogenannte "mushroom"-Strukturen.

In einer bevorzugten Ausführungsform weisen die Vorsprünge keine verbreiterten Stirnflächen auf.

Die Stirnflächen der Vorsprünge können selbst strukturiert sein, um ihre Oberfläche zu erhöhen. In diesem Fall wird als senkrechte Höhe der Vorsprünge die mittlere senkrechte Höhe der Stirnfläche angesehen.

In einer bevorzugten Ausführungsform liegt die senkrechte Höhe aller Vorsprünge in einem Bereich von 1 $\mu$m bis 10 mm, bevorzugt 1 $\mu$m bis 5 mm, insbesondere 1 $\mu$m bis 2 mm, bevorzugt in einem Bereich von 10 $\mu$m bis 2 mm.

In einer bevorzugten Ausführungsform entspricht die Grundfläche von der Fläche her einem Kreis mit einem Durchmesser zwischen 0,1 $\mu$m bis 5 mm, bevorzugt 0,1 $\mu$m und 2 mm, insbesondere bevorzugt zwischen 1 $\mu$m und 500 $\mu$m, besonders bevorzugt zwischen 1 $\mu$m und 100 $\mu$m. In einer Ausführungsform ist die Grundfläche ein Kreis mit einem Durchmesser zwischen 0,3 $\mu$m und 2 mm, bevorzugt 1 $\mu$m und 100 $\mu$m.

Der mittlere Durchmesser der Stämme liegt bevorzugt zwischen 0,1 $\mu$m bis 5 mm, bevorzugt 0,1 $\mu$m und 2 mm, insbesondere bevorzugt zwischen 1 $\mu$m und 100 $\mu$m. Bevorzugt ist die Höhe und der mittlere Durchmesser entsprechend dem bevorzugten Aspektverhältnis angepasst.

In einer bevorzugten Ausführungsform ist bei verbreiterten Stirnflächen die Oberfläche der Stirnfläche eines Vorsprungs mindestens 1,01 mal, bevorzugt mindestens 1,5 mal so groß wie die Fläche der Grundfläche eines Vorsprungs. Sie kann beispielsweise um den Faktor 1,01 bis 20 größer sein.

In einer weiteren Ausführungsform ist die Stirnfläche zwischen 5% und 100% größer als die Grundfläche, besonders bevorzugt zwischen 10% und 50% der Grundfläche.

In einer bevorzugten Ausführungsform beträgt der Abstand zwischen zwei Vorsprüngen weniger als 2 mm, insbesondere weniger als 1 mm.

Die Vorsprünge sind bevorzugt regelmäßig periodisch angeordnet.

Der Elastizitätsmodul aller Bereiche des Vorsprungs beträgt bevorzugt 50 kPa bis 3 GPa. Bevorzugt liegt der Elastizitätsmodul von weichen Bereichen, d. h. insbesondere des Bereich umfassend die Stirnfläche, 50 kPa bis 20 MPa, bevorzugt 100 kPa bis 10 MPa. Bevorzugt liegt davon unabhängig der Elastizitätsmodul der Bereiche mit hohem Elastizitätsmodul 1 MPa bis 3 GPa, bevorzugt 2 MPa bis 1 GPa. Bevorzugt liegen für alle weicheren und härteren Bereiche die Elastizitätsmodule in den vorstehend angegebenen Bereichen. Bevorzugt nimmt der Elastizitätsmodul der Bereiche des Vorsprungs zur Stirnfläche hin ab.

Das Verhältnis der Elastizitätsmodule des Bereichs mit dem geringsten Elastizitätsmodul und dem Bereich mit dem höchsten Elastizitätsmodul liegt bevorzugt bei unter 1:2000, insbesondere bei unter 1:1500, bevorzugt bei unter 1:1200, davon unabhängig mindestens bei 1:1,1, bevorzugt mindestens 1:1,5, insbesondere bei mindestens 1:2. Dabei kann ein Verhältnis von bis zu 1:1000 vorteilhaft sein.

In einer weiteren Ausführungsform der Erfindung liegt das Verhältnis des Elastizitätsmodule des Bereichs mit dem geringsten Elastizitätsmodul und dem Bereich mit dem höchsten Elastizitätsmodul bevorzugt bei 1:5 bis 1:50 (weich zu hart), insbesondere bei 1:10 bis 1:20.

In einer weiteren Ausführungsform liegt das Verhältnis zwischen 1:1,1 bis 1:500, insbesondere bei 1:1,5 bis 1:5. Dadurch bleibt auch der härtere Bereich ausreichend flexibel, beispielsweise für nicht ebene oder gekrümmte Oberflächen.

Die Vorsprünge können aus vielen unterschiedlichen Materialien bestehen, bevorzugt sind Elastomere, besonders bevorzugt vernetzbare Elastomere. Die Bereiche mit höherem Elastizitätsmodul können auch Duroplaste umfassen.

Die Vorsprünge können daher folgende Materialien umfassen:

epoxy- und/oder silikonbasierte Elastomere, Polyurethane, Epoxidharze, Acrylatsysteme, Methacrylatsysteme, Polyacrylate als Homo- und Copolymere, Polymethacrylate als Homo- und Copolymere (PMMA, AMMA Acrylnitril/Methylmethacrylat), Polyurethan(meth)acrylate, Silikone, Silikonharze, Kautschuk, wie R-Kautschuk (NR Naturkautschuk, IR Poly-Isopren-Kautschuk, BR Butadienkautschuk, SBR Styrol-Butadien-Kautschuk, CR Chloropropen-Kautschuk, NBR Nitril-Kautschuk) M-Kautschuk(EPM Ethen-Propen-Kautschuk, EPDM Ethylen-Propylen-Kautschuk), Ungesättigte Polyesterharze, Formaldehydharze, Vinylesterharze, Polyethylene als Homo- oder Copolymere, sowie Mischung und Copolymere der vorgenannten Materialien. Bevorzugt sind auch Elastomere, welche zur Verwendung im Bereich Verpackung, Pharma und Lebensmittel von der EU (gemäß EU-VO Nr. 10/2011 vom 14.01.2011, veröffentlicht am 15.01.2011) oder FDA zugelassen sind oder silikonfreie UV-härtbare Harze aus der PVD und CVD-Verfahrenstechnik. Dabei steht Polyurethan(meth)acrylate für Polyurethanmethacrylate, Polyurethanacrylate, sowie Mischungen und/oder Copolymere davon.

Bevorzugt sind epoxy- und/oder silikonbasierte Elastomere, Polyurethan(meth)acrylate, Polyurethane, Silikone, Silikonharze (wie UV-härtbares PDMS), Polyurethan(meth)acrylate, Kautschuk (wie EPM, EPDM).

In einer Ausführungsform der Erfindung sind mindestens zwei der Vorsprünge der strukturierten Oberfläche über einen Film auf der Stirnfläche miteinander verbunden. Dieser Film kann einen ähnlichen Elastizitätsmodul wie das Material der Stirnflächen aufweisen. Unter einem Film wird dabei eine Materialverbindung mit konstanter Dicke verstanden, welche auf den Stirnflächen aufliegt und auch den Bereich zwischen den Vorsprüngen überbrückt. Dadurch bildet der Film, wenn eine größere Anzahl an Vorsprüngen überbrückt wird mit den Vorsprüngen eine geschlossene Oberfläche. Dies kann vorteilhaft sein, wenn eine Verschmutzung der strukturierten Oberfläche vermieden werden soll. Auch trägt das eingeschlossene Gas zur Elastizität der so strukturierten Oberfläche bei. Aufgrund der Elastizität und geringen Dicke des Films bleiben die positiven Adhäsionseigenschaften der Vorsprünge erhalten.

Der Film weist bevorzugt eine Dicke auf, welche unter 50 %, bevorzugt unter 30 % der senkrechten Höhe der überbrückten Vorsprünge liegt. Dabei wird der Film nicht in die Berechnung der Höhe einbezogen.

Der Film weist bevorzugt eine Dicke von unter 2 mm, bevorzugt von unter 1 mm besonders bevorzugt von unter 800 $\mu$m auf.

Die Erfindung betrifft außerdem ein Verfahren zur Herstellung einer strukturierten Oberfläche eines Festkörpers, wobei die Oberfläche eine Strukturierung aufweist, die eine Vielzahl von Vorsprüngen umfasst, die mindestens jeweils einen Stamm aufweisen mit einer von der Oberfläche wegweisende Stirnfläche umfassen, wobei der Stamm in Längsrichtung mindestens einen Bereich mit geringerem Elastizitätsmodul und mindestens einen Bereich mit höherem Elastizitätsmodul umfasst.

Im Folgenden werden einzelne Verfahrensschritte näher beschrieben. Die Schritte müssen nicht notwendigerweise in der angegebenen Reihenfolge durchgeführt werden, und das zu schildernde Verfahren kann auch weitere, nicht genannte Schritte aufweisen.

Dazu wird zunächst ein Templat zur Abformung von Vorsprüngen bereitgestellt. In dieses Templat wird eine erste Zusammensetzung umfassend eine Vorstufe für das Material für die Stirnflächen als Flüssigkeit in das Templats eingebracht, bevorzugt als Lösung in einem Lösungsmittel. Bevorzugt handelt es sich um ein Material mit einem im ausgehärteten Zustand geringerem Elastizitätsmodul als die weiteren verwendeten Materialien. Die Zusammensetzung sammelt sich in den Vertiefungen des Templats, welche für die Vorsprünge vorgesehen sind.

Durch die Unterschiede in der Benetzung zwischen dem Templat und der Zusammensetzung bildet sich im Templat ein Meniskus aus. Dieser kann beispielsweise konkav oder konvex ausgebildet werden.

Es kann erforderlich sein, vor dem nächsten Schritt mindestens einen Teil des Lösungsmittels zu verdampfen.

Das Einbringen als Lösung ist bevorzugt, da dadurch die Menge an verbleibendem Material besser gesteuert werden kann. Auch ist dadurch die Form des Meniskus einfach zu beeinflussen. Dadurch kann die Form der späteren Grenzfläche zu den nächsten Bereichen gesteuert werden. Bevorzugt sind Grenzflächen, wie sie für die Vorsprünge beschrieben werden, bevorzugt mit einer gekrümmten Grenzfläche.

Es ist auch möglich, das Templat vorher entsprechend zu beschichten, um eine bestimmte Oberflächenbenetzung einzustellen.

Optional kann die Zusammensetzung auch schon vollständig oder anteilig gehärtet werden.

Falls erforderlich kann eine geringe Menge an Bindemittel oder Vernetzungshilfsmittel aufgebracht werden, um die Bindung zum nächsten Material zu verbessern. Dies kann beispielsweise erforderlich sein, wenn beide Materialien auf unterschiedlichen Härtungsmechanismen beruhen. Auch kann die Oberfläche der Zusammensetzung behandelt werden, z. B. durch Plasmabehandlung, um Bindungsstellen für die nächste Zusammensetzung zu schaffen.

Der Schritt kann mehrfach wiederholt werden, beispielsweise um weitere Bereiche in die Vorsprünge einzuführen.

In einer bevorzugten Ausführungsform wird das so vorbereitete Templat zum Abformen mit dem Material des Stamms verwendet. Dadurch verbindet sich das bereits in dem Templat befindliche Material mit dem Material für die Stämme.

Bevorzugt wird in einem letzten Schritt das Material für das Backinglayer, d.h. die Oberfläche auf der die Vorsprünge angeordnet sind, auf das Templat aufgebracht und gehärtet. Besonders bevorzugt ist dies das gleiche Materials wie für die Stämme der Vorsprünge, so dass Backinglayer und die Stämme in einem Schritt hergestellt werden.

Im nächsten Schritt wird die zuletzt aufgebrachte Zusammensetzung und/oder alle bisher aufgebrachten Zusammensetzungen gehärtet. Danach wird die strukturierte Oberfläche aus dem Templat herausgelöst. Man erhält eine strukturierte Oberfläche mit Vorsprüngen, welche aus mindestens zwei Bereichen bestehen.

Das Verfahren erlaubt die einfache Herstellung von Vorsprüngen, welche mindestens zwei unterschiedliche Materialien umfassen. Insbesondere unter Steuerung der sich zwischen den Materialien ausbildenden Grenzfläche. Da die Form der Grenzfläche einen positiven Effekt auf die Adhäsionseigenschaften hat, können Oberflächen mit verbesserten Adhäsionseigenschaften erhalten werden, ohne dass komplizierte Schritte, wie die Bildung von mushroom-Strukturen nötig sind, welche meistens deutlich mehr Schritte erfordern und nur schwierig auf größere Flächen übertragbar sind. Auch ist die Herstellung der Template einfacher. Auch können weichere Materialien verwendet werden, welche bei den herkömmlichen Herstellungsverfahren nicht verwendet werden können.

Das erfindungsgemäße Verfahren erlaubt aufgrund der Verwendung des Templats auch die Herstellung von Vorsprüngen mit besonders hohen Aspektverhältnissen, beispielsweise größer als 3. Bei Verfahren welche Vorsprünge ohne Templat modifizieren ist dies nicht ohne Kollabieren der Vorsprünge möglich. Außerdem können bei dem erfindungsgemäßen Verfahren viele unterschiedliche Materialien miteinander kombiniert werden. So sind auch Kompositvorsprünge aus Silikonen und Polyurethanacrylaten möglich.

Die Erfindung betrifft außerdem ein Verfahren zur Herstellung der erfindungsgmäßen Vorsprünge, bei der zunächst der Bereich mit dem höheren Elastizitätsmodul, bevorzugt mit einem Teil der Basisschicht auf der die Vorsprünge angeordnet sind, mit einer entsprechend geformten Form herstellt wird, wobei die Form auch die Geometrie der späteren Grenzfläche bestimmt. Der abgeformte Stamm wird danach in eine weitere Form überführt, welche in Kombination mit dem eingeführten Stamm einen entsprechenden Hohlraum für den nächsten Bereich ausbildet. Danach wird in diesen Hohlraum das Material für den nächsten Bereich eingeführt. Dadurch bildet sich genau die Grenzfläche der gewünschten Geometrie. Dieser Schritt kann auch mehrfach wiederholt werden, um weitere Bereiche aufzubauen. In einem letzten Schritt kann es notwendig sein, überschüssiges Material zu entfernen, um eine einheitliche Kontaktfläche zu erhalten. Das Verfahren kann außerdem noch abhängig vom Material Trocknungs- bzw. Härtungsschritte (z. B. chemisch, physikalisch) umfassen.

Die Erfindung betrifft außerdem einen Verbund aus zwei Körpern, wobei die Schnittstelle eine erfindungsgemäße strukturierte Oberfläche aufweist.

Die strukturierten Oberflächen der Erfindung sind besonders für raue und weiche Oberflächen geeignet. Dies sind insbesondere natürliche Oberflächen, wie Haut.

Weitere Einzelheiten und Merkmale ergeben sich aus der nachfolgenden Beschreibung von bevorzugten Ausführungsbeispielen in Verbindung mit den Unteransprüchen. Hierbei können die jeweiligen Merkmale für sich alleine oder zu mehreren in Kombination miteinander verwirklicht sein. Die Möglichkeiten, die Aufgabe zu lösen, sind nicht auf die Ausführungsbeispiele beschränkt. So umfassen beispielsweise Bereichsangaben stets alle - nicht genannten - Zwischenwerte und alle denkbaren Teilintervalle.

Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente. Im Einzelnen zeigt:

Fig. 1     Ausführungsform der Erfindung;

Fig. 2     Weitere Ausführungsformen der Erfindung;

Fig. 3     Schematische Darstellung verschiedener Ausführungsformen von Vorsprüngen;

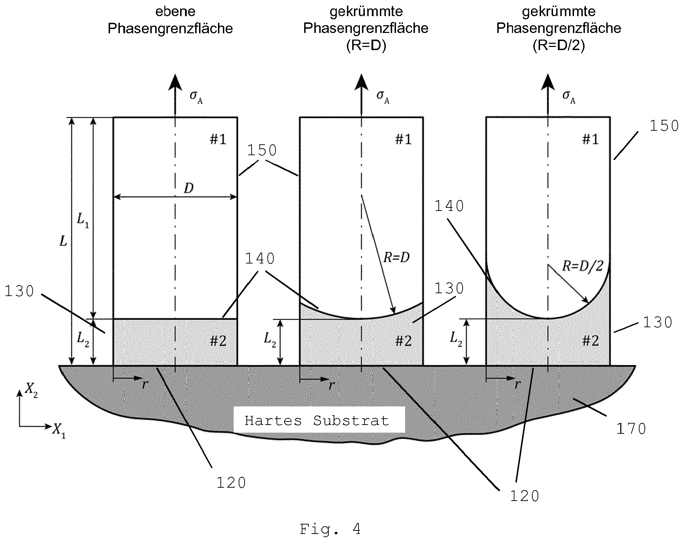

Fig. 4     Schematische Darstellung eines Vorsprungs mit verschiedenen Geometrien der Phasengrenzflächen in Kontakt mit einer Oberfläche; Kompositpillars mit ebener Grenzfläche (links), gekrümmter Grenzfläche ($R=D$; Mitte und $R=D/2$ rechts). $R$ ist der Radius der säulenförmigen Pillars; $D$ steht für den Durchmesser; $L$ ist die Gesamthöhe, $L_1$ und $L_2$ sind die Höhen des steiferen Bereichs (#1) und des weicheren Bereichs (#2); Die Kompositpillars haften mit ihrer Stirnfläche an einem steifen Substrat und eine Zugkraft $\sigma_A$ wirkt am freien Ende; Es wird die senkrechte Spannung (Zugspannung) entlang der Kontaktfläche des Kompositpillars und des Substrats beim Auseinanderziehen berechnet;

Fig. 5     Normalspannung $\sigma_{22}$ entlang der Vorsprung/Substrat-Grenzfläche, normiert auf die Zugkraft $\sigma_A$;

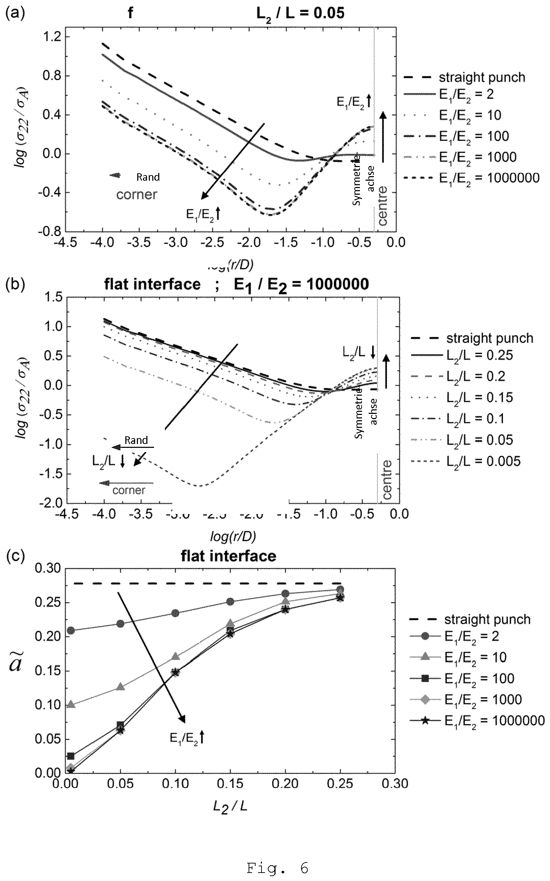

Fig. 6     Analyse eines Kompositpillars mit ebener Grenzfläche (a) Zugspannung $\sigma_{22}$ entlang der Kompositpillar/Substrat-Kontaktfläche für unterschiedliche Kombination von Elastizitätsmodul-Verhältnisse $E_1/E_2$ des härteren/oberen und weicheren/unteren Teil des Kompositpillars, und konstantem Verhältnis von $L_2/L=0{,}05$; (b) Zugspannung $\sigma_{22}$ entlang der Kompositpillar/Substrat-Kontaktfläche für unterschiedliche Kombinationen der Dicke des weicheren Bereichs $L_2$ normalisiert auf die Gesamthöhe $L$ und einen konstantem Verhältnis $E_1/E_2=1000000$; (c) Kalibrierungskoeffizient von Kompositpillars für verschiedene Kombination von Verhältnis der Höhe $L_2/L$ und Elastizitätsmodulverhältnis $E_1/E_2$; Die gestrichelte Linie steht für die Ergebnisse für Referenzprobe ("straight punch");

Fig. 7     Zugspannung $\sigma_{22}$ entlang der Kompositpillar/Substrat-Kontaktfläche für Kompositpillars mit verschiedenen Grenzflächengeometrien, $E_1/E_2 = 1000$ und $L_2/L$-Verhältnisse von a) 0,25 und b) 0,05; Die gestrichelte Linie zeigt die Referenzprobe ("straight punch");

Fig. 8     Einfluss des Verhältnisses der Elastizitätsmodule auf die normalisierte Adhäsionsstärke von Kompositpillars mit a) ebener Grenzfläche; gekrümmt mit Radius $R$ gleich b) Durchmesser $D$ ($R=D$); c) Hälfte des Durchmessers $D$ ($R=D/2$); Die gestrichelte Linie zeigt die Referenzprobe; Die verschiedenen Verhältnisse der Elastizitätsmodule sind $E_1/E_2=2$ (Kreise); $E_1/E_2=10$ (Dreiecke); $E_1/E_2=100$ (Quadrate); $E_1/E_2=1000$ (Rauten); $E_1/E_2=1000000$ (Sterne);

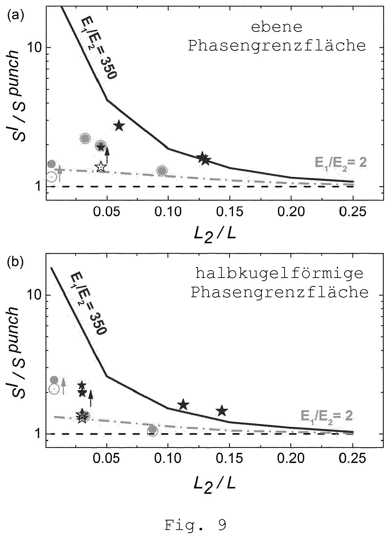

Fig. 9     Vergleich der Adhäsionsstärke ($S^l/S^{punch}$) von experimentellen und numerischen Ergebnissen für Kompositpillars mit a) ebener Grenzfläche und c) gekrümmter Grenzfläche mit Elastizitätsmodulverhältnissen $E_1/E_2=2$ und 350. Die FEM-Ergebnisse sind mit Linien dargestellt; Referenzprobe (gestrichelt); Kompositpillar mit $E_1/E_2=2$ (Strich-Punkt); Kompositpillar mit $E_1/E_2=350$ (durchgezogen); Die experimentellen sind mit den Symbolen gekennzeichnet; $E_1/E_2=2$ (Kreise); $E_1/E_2=350$ (Sterne; wobei die gefüllten und leeren Sterne die Abziehkräfte, bzw. die Kräfte zum Beginn der Ablösung darstellen); Pfeile zeigen an, wenn beide Kräfte deutlich voneinander abweichen;

Fig. 10    Schematische Darstellung der Herstellung einer strukturierten Oberfläche;

Fig. 11    Schematische Darstellung der Herstellung von Ausführungsformen der Erfindung;

Fig. 12    Schematische Darstellung eines Alternativverfahrens zur Herstellung von Vorsprüngen gemäß der Erfindung;

Fig. 13    Aufnahmen der hergestellten Vorsprünge nach dem ersten Abformen (oben) und Aufnahmen der Grenzfläche bei erfindungsgemäßen Vorsprüngen;

Fig. 14    Darstellung einer Spannung-Dehnungs-Kurve bei Adhäsionsmessung;

Fig. 15    Adhäsionsmessung verschiedener Vorsprünge gegen ein flaches Glassubstrat;

Fig. 16    Adhäsionsmessung einer Referenzprobe mit Vorsprüngen aus Polyurethan auf glattem (gefüllte Symbole) und rauen Substrat (ungefüllte Symbole); Variation der Haltezeit von 0 bis 120 s;

Fig. 17    Adhäsionsmessung mit Kompositvorsprüngen mit variierender Dicke des oberen Bereichs $L_2$ und verschiedenen Geometrien der Phasengrenzflächen a)und c) eben; sowie b) and d) halbkugelförmig gekrümmt; auf a) und b) glatten Substrat sowie c) und d) rauen Substrat; Kompositpillar mit $E_1/E_2=2$ (Kreise); Kompositpillar mit $E_1/E_2=350$ (Sterne); Anpresskraft 50 mN (durchgezogen) und 150 mN (gestrichelt);

Fig. 18    Optische Mikroskopieaufnahmen von Ablösungsmustern (crack pattern), gemessen mit eine Geschwindigkeit 2 $\mu$m/s; a) Vorsprünge mit sehr dicker weicher Spitze; b) Vorsprünge mit gebogener Grenzfläche und dünner Spitze; c) Vorsprünge mit ebener Grenzfläche und dünner Spitze;

Fig. 19 Normalisierte Adhäsionsparameter für Kompositvorsprünge mit $E_1/E_2$=2 im Vergleich mit PU Referenz auf glatter (links) und rauer (rechts) Oberfläche; (a) Adhäsionsspannung $\sigma_{adh}$; (b) Maximale Spannung $\varepsilon_{max}$ und (c) Adhäsionsenergie $W_{adh}$; Die Werte wurden für eine Kontaktzeit von 0 und 120 s ermittelt;;

Fig. 20 Schematische Darstellung einer kleinen Ablösung, ausgehend vom Rand der Kontaktfläche zwischen Substrat (unterer Halbkreis) und Vorsprung (oben);

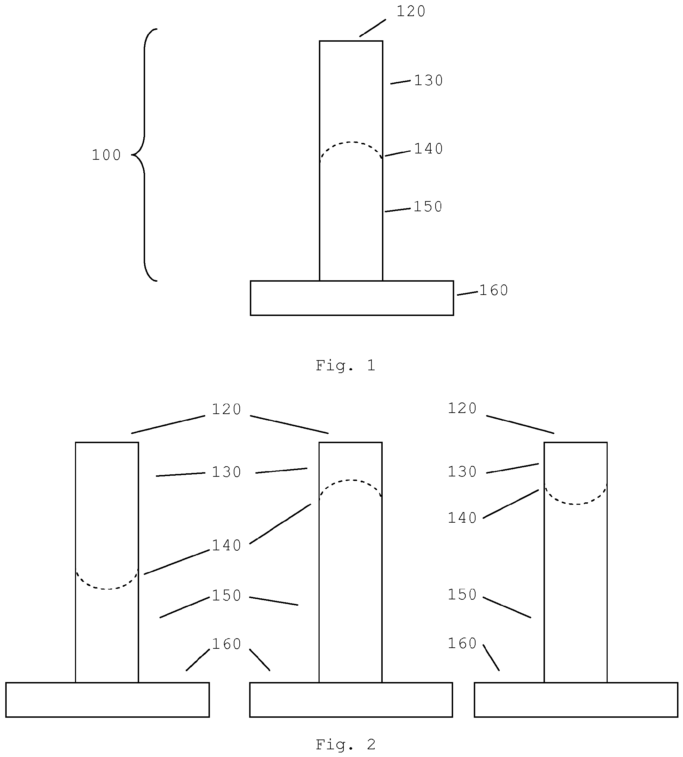

Figur 1 zeigt einen Querschnitt durch einen Vorsprung 100 gemäß der Erfindung. Dieser Vorsprung umfasst einen Bereich mit geringerem Elastizitätsmodul 130, welcher die Stirnfläche 120 umfasst, und einen Bereich mit höherem Elastizitätsmodul 150. Beide Bereiche grenzen an der Phasengrenzfläche 140 aneinander, welche in dieser Ausführungsform eine Krümmung aufweist. Der Vorsprung ist auf einer Oberfläche 160 angeordnet. Diese Oberfläche auf der die Vorsprünge angeordnet sind, kann auch als Backinglayer oder Rückschicht bezeichnet werden.

Figur 2 zeigt weitere Ausführungsformen der Erfindung als Querschnitt durch Vorsprünge 100. Jeder der Vorsprünge umfasst einen Bereich mit geringerem Elastizitätsmodul 130, welcher die Stirnfläche 120 umfasst, und einen Bereich mit höherem Elastizitätsmodul 150. Beide Bereiche grenzen an der Phasengrenzfläche 140 aneinander, welche in dieser Ausführungsform eine Krümmung aufweist. Alle Vorsprünge sind auf einer Oberfläche 160 angeordnet. Die Ausführungsformen unterscheiden sich in der Krümmung der Phasengrenzfläche und dem Verhältnis der beiden Bereiche zueinander. Bei den beiden rechten Ausführungsformen ist der Bereich 150 deutlich größer als der Bereich 130. Dadurch sind die Vorsprünge selbst deutlich steifer, behalten aber durch den Bereich 130 ihre guten Adhäsionseigenschaften.

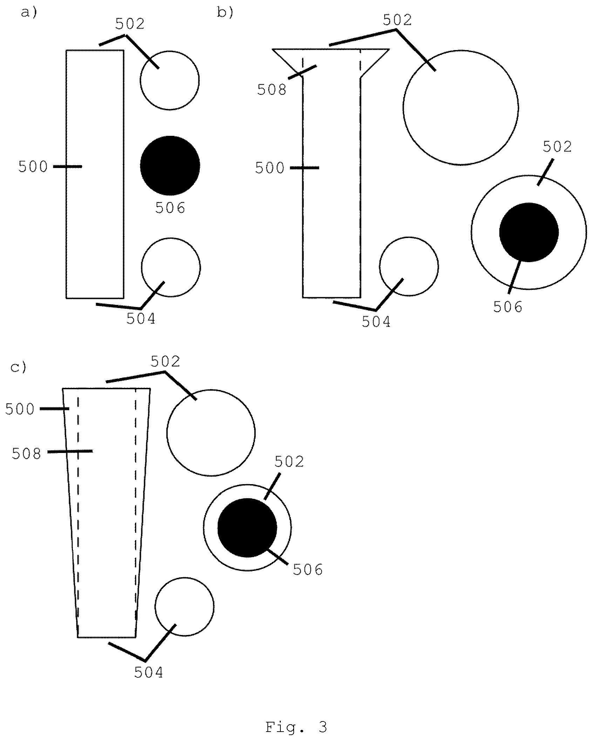

Figur 3 zeigt eine schematische Darstellung von Ausführungsformen eines Vorsprungs. Ein Vorsprung 500 umfasst eine Stirnfläche 502 und eine Grundfläche 504. Die Stirnfläche 502 und Grundfläche 504 sind in Seitenansicht (links) und Draufsicht (rechts) gezeigt. Die schwarze Fläche 506 zeigt den überlappenden Bereich einer senkrechten Projektion der Stirnfläche 502 auf die Grundfläche 504. Er kann mit den Flächen identisch sein (a)) oder im Falle einer verbreiterten Stirnfläche (b) und c)) innerhalb der Stirnfläche 502 liegen. Der durch die Projektion des Überlappungsbereichs 506 auf die Stirnfläche aufgespannte Körper 508 ist gestrichelt dargestellt. Er liegt bei allen Vorsprüngen innerhalb des Vorsprungs, wobei er im Fall a) mit dem Vorsprung selbst identisch ist. Innerhalb schließt daher auch gemeinsame Außenflächen mit ein.

Figur 4 zeigt eine schematische Darstellung des Vorsprungs, welcher mit verschiedenen Geometrien der Phasengrenzfläche simuliert wurde. Der Vorsprung ist als Querschnitt dargestellt und kreissymmetrisch. Er weist einen Durchmesser D und eine Höhe L auf. Die Symmetrieachse ist gestrichelt eingezeichnet. Die Phasengrenzfläche 140 ist eben (links) oder kugelförmig gekrümmt, wobei sie in Längsrichtung des Vorsprungs ein Maximum aufweist. Der Radius der Krümmung der Phasengrenzfläche beträgt D (Mitte) bzw. D/2 (rechts). Die Höhe $L_1$ bezeichnet die senkrechte Höhe vom Fuß des Vorsprungs bis zum Maximum der Phasengrenzfläche. Die Höhe $L_2$ die senkrechte Höhe bis zur Stirnfläche des Vorsprungs gemessen vom Maximum der Phasengrenzfläche. Die Stirnfläche 120 des Vorsprungs ist in Kontakt mit einer Substratoberfläche 170. Im Bereich der Höhe $L_1$ ist ein hartes Material angeordnet, im Bereich der Höhe $L_2$ ein weiches Material. Die Oberfläche 170 wird in der Simulation als hart simuliert.

In der Simulation wurde eine Zugkraft $\sigma_A$ an das freie Ende des Vorsprungs angewendet. Die Verteilung der Zugspannung innerhalb des Vorsprungs ändert sich stark, wenn $L_1$ und $L_2$ verändert werden. Ein singuläres Spannungsfeld entwickelt sich nahe der Kante des Vorsprungs und der starren Oberfläche 170. Die resultierende Randsingularität hat die Form $H_n r^{\lambda_n-1}$, wobei H und $\lambda$-1 die Zugintensität und die Ordnung der Spannungssingularität sind. $n$ = 1, 2 entsprechen Vorsprung und Oberfläche. r ist der Abstand vom Rand.

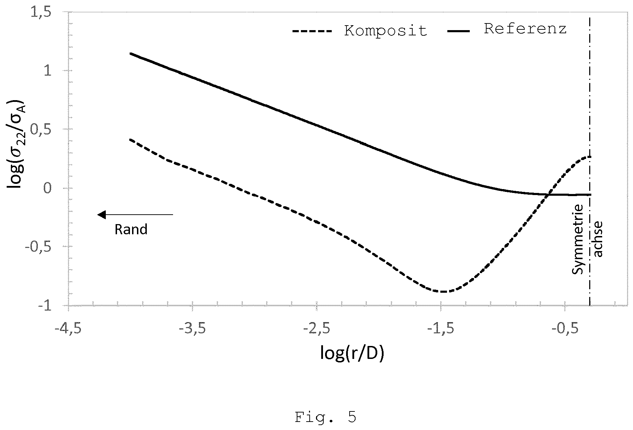

Die Spannungsverteilung wurde für verschiedene Verhältnisse von $L_1$ und $L_2$ simuliert, dabei bleib die Höhe L = $L_1$+$L_2$ konstant. Das Verhältnis L/D betrug 2. Als Simulationssoftware wurde Abaqus (Simulia) verwendet. Für den Bereich mit dem höheren Elastizitätsmodul wurden 1,3 GPa gewählt und für den Bereich mit geringerem Elastizitätsmodul wurden 2 MPa gewählt. Die resultierende Normalspannung $\sigma_{22}$ normiert auf die Zugkraft $\sigma_A$ zeigt Figur 5. Komposit ist die Spannungsverteilung für $L_2$/L gleich 0,05. Referenz ist ein gerader Vorsprung bestehend aus einem Material mit planarer Stirnfläche ohne Krümmung.

Die Simulationen zeigen die Spannungsverteilung entlang der Stirnflächen/Oberflächen-Grenzfläche. Bei großen Höhen $L_2$ ist die Spannung am äußeren Rand des Vorsprungs sehr hoch. Dies begünstigt Rissbildung am äußeren Rand des Vorsprungs beim Ablösevorgang. Bei kleiner werdenden Höhen $L_2$ sinkt die Spannung am äußeren Rand des Vorsprungs und die Spannung im Zentrum steigt gleichzeitig an. Bei sehr kleinen Höhen $L_2$ sind die Spannungen am Rand und im Zentrum fast gleich hoch, was Rissbildung im Zentrum begünstigt. Diese Ergebnisse deuten darauf hin, dass die Adhäsionsspannung mit abnehmender Schichtdicke $L_2$ steigt.

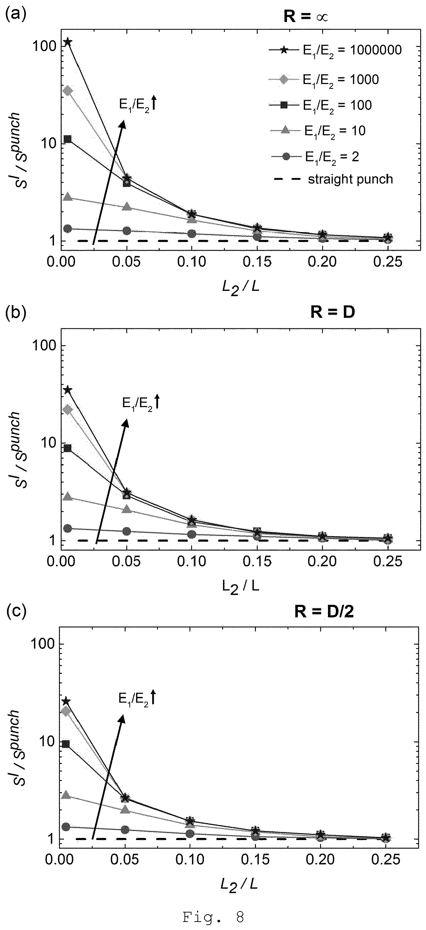

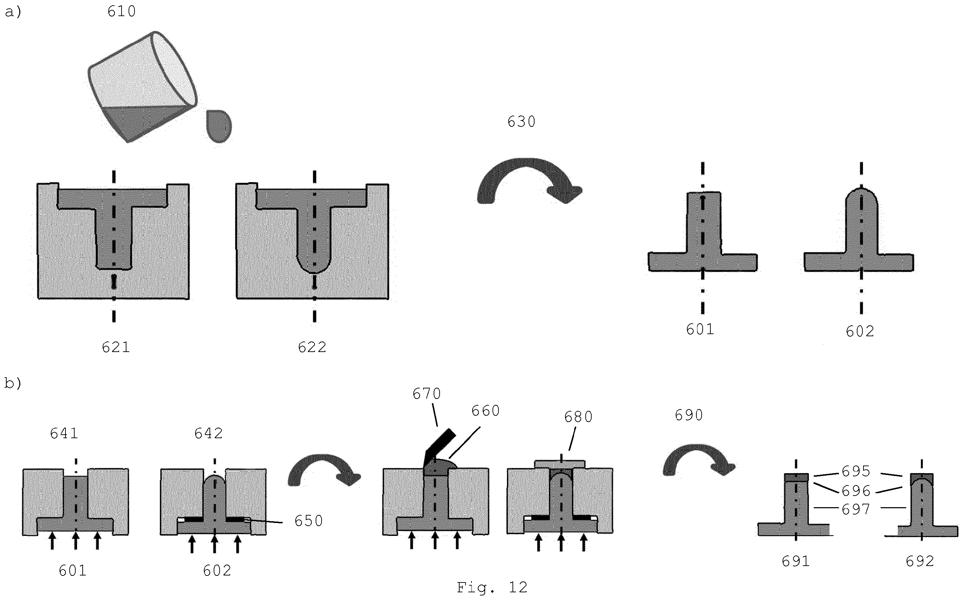

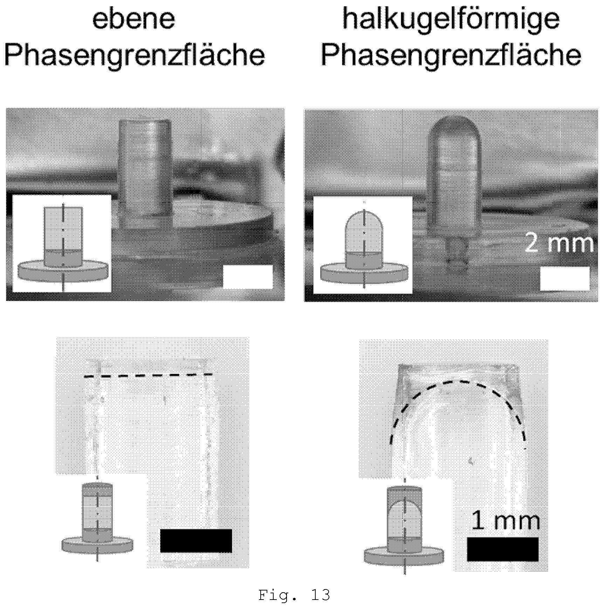

Die Figuren 6 bis 9 zeigen weitere Simulationen und experimentelle Ergebnisse. Dabei wurden Kompositpillars entsprechend der Beschreibung von Figur 12 und 13 verwendet. In den Beschreibungen zu den Figuren wird entsprechend die Notation aus Figur 12 verwendet.

Für die Simulationen wurde ein säulenförmiger Vorsprung mit einem Durchmesser D und einer Länge L auf einem steifen Substrat ohne Defekte entlang der Kontaktfläche angenommen. Der Vorsprung wird als isotrop elastisch und als inkompressibler Festkörper angenommen. Am freien Ende wirkt eine Zugspannung $\sigma_A$, welche zu einer Spannungssingularität an der Vorsprung/Substrat-Grenzfläche führt. Die "corner singularity"-Methode wurde von Akisanya, A.R., Fleck, N.A., 1997. Interfacial cracking from the freeedge of a long bi-material strip. International Journal of Solids and Structures 34, 1645-1665; und Khaderi, S.N., Fleck, N.A., Arzt, E., McMeeking, R.M., 2015. Detachment of an adhered micropillar from a dissimilar substrate. Journal of the Mechanics and Physics of Solids 75, 159-183 übernommen und angepasst. Die Singularitätsbedingungen für die asymptotische senkrechte Spannung (asymptotic normal stress $\sigma_{22}$) und die Scherspannung ($\sigma_{12}$) sind in den Gleichungen (1) und (2) gezeigt:

$$\sigma_{22} = H_1 r^{-0.406} \qquad\qquad (1)$$

$$\sigma_{12} = 0.505\, H_1 r^{-0.406} \qquad\qquad (2)$$

wobei r der Abstand von der Kante des Vorsprungs ist. Die Richtungen $X_1$ und $X_2$ sind in Figur 4 angegeben. Die Ausdruck $H_1$ ist dabei abhängig von dem Durchmesser D, der Zugspannung $\sigma_A$ und dem Kalibrierungskoeffizienten $\tilde{a}$ und kann wie folgt geschrieben werden:

$$H_1 = \sigma_A D^{0.406} \tilde{a} \qquad\qquad (3)$$

Die Kalibrierungskoeffizienten für einen geraden Vorsprung (straight punch) ist $a_1 = 0{,}278$ für eine 3-dimensionale achsymmetrische Dehnung (Khaderi, S.N., Fleck, N.A., Arzt, E., McMeeking, R.M., 2015. Detachment of an adhered micropillar from a dissimilar substrate. Journal of the Mechanics and Physics of Solids 75. 159-183). Die Lösungen für die normierten asymptotischen Normal- und Scherspannungen sind daher

$$\log(\sigma_{22}/\sigma_A) = -0.556 - 0.406 \log(r/D)$$

und

$$\log\left(\frac{\sigma_{12}}{\sigma_A}\right) = -0.853 - 0.406 \log\left(\frac{r}{D}\right)$$

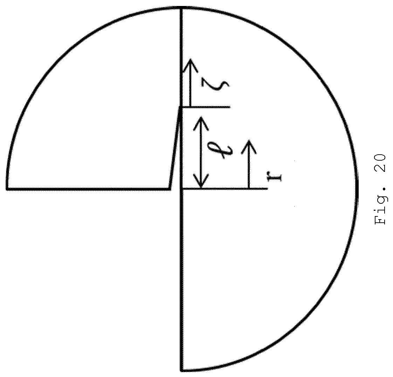

Um die Adhäsionsstärke eines Pillars vorherzusagen, wurde ein Riss (Ablösung) der Länge 1 am Rand der Kontaktfläche angenommen (Figur 20), wo die "corner singularity" das Ablöseverhalten bestimmt. Die Spannungsverteilungen an der Rissspitze (crack) kann beschrieben werden durch

$$\sigma_{22} = \frac{K_I}{\sqrt{2\pi\zeta}} \text{ und } \sigma_{12} = \frac{K_{II}}{\sqrt{2\pi\zeta}} \qquad\qquad (4)$$

, wobei $\zeta$ der Abstand von der Rissspitze, bzw. dem Rand der Ablösung, ist. Eine schematische Darstellung zeigt Figur 20 mit einer Ablösung beginnend am Rand und der Länge 1. Die Mode I und Mode II Spannungsintensitätsfaktoren, $K_I$ und $K_{II}$, sind gegeben als

$$K_I = 2.6 H_1 l^{0.094} = 2.6 \sigma_A D^{0.406} \tilde{a} l^{0.094} \qquad\qquad (5)$$

und

$$K_{II} = 0.8 H_1 l^{0.094} = 0.8 \sigma_A D^{0.406} \tilde{a} l^{0.094} \qquad\qquad (6)$$

Die Energiefreisetzungsrate während der Ablösung ist

$$G = \frac{1-v^2}{2E}(K_I^2 + K_{II}^2) = \frac{3}{8E}(K_I^2 + K_{II}^2) = \frac{2.8\sigma_A^2 D^{0.81} l^{0.19} \tilde{a}^2}{E_1} \qquad (7)$$

, wobei E der Elastizitätsmodul und v die Querdehnzahl (Poisson's ratio), gleich 0,5, was Inkompressiblität entspricht. Damit es zu einer Ablösung kommt, muss die Energiefreisetzungsrate gleich der Adhäsionsenergie, W, sein. Die Adhäsionsenergie eines Kompositpillars $S^I$ kann ausgedrückt werden als:

$$S^I = \frac{0.6\sqrt{EW}}{D^{0.406} l^{0.094} \tilde{a}} \qquad (8)$$

Die Adhäsionsstärke kann normalisiert werden, indem die Adhäsionsstärke durch die Adhäsionstärke eines geraden Vorsprungs (straight punch) $S^{punch}$ unter Annahme der gleichen anfänglichen Ablösungslänge (crack length, l) teilt:

$$\frac{S^I}{S^{punch}} = \frac{a_1}{\tilde{a}} \qquad (9)$$

Die Adhäsionsstärke wurde mit Gleichung 9 berechnet.

Um den Einfluss der Geometrie der Grenzfläche zu untersuchen, wurden verschiedene Grenzflächengeometrien (Figur 4) und uniforme Vorsprünge untersucht. Die Berechnungen wurden dreidimensional achsensymmetrisch durchgeführt. Für jede Grenzflächengeometrie wurden sechs unterschiedliche Verhältnisse der beiden Bereiche ($L_2/L$=0,25, 0,20, 0,15, 0,10, 0,05 und 0,005) und fünf Verhältnisse der Elastizitätsmodule ($E_1/E_2$ =2, 10, $10^2$, $10^3$ und $10^6$) untersucht.

Um die berechneten Ergebnisse vergleichen zu können wurden analog zu den später beschriebenen Versuchen Kompositpillars aus PEGdma (350 MPa)/PU (900 kPa) und PDMS (2 MPa)/PU (900 kPa) und nur aus PU (straight punch Referenzprobe) hergestellt. Es wurden gemäß dem Verfahren auf Figur 12 entsprechende Vorsprünge mit einem Durchmesser von 2 mm und eine Höhe von ungefähr 4 mm mit variierender Dicke des oberen Bereichs hergestellt. Die Vorsprünge konnten eine ebene Phasengrenzfläche oder eine kugelförmig gekrümmte (R=D/2) Phasengrenzfläche aufweisen.

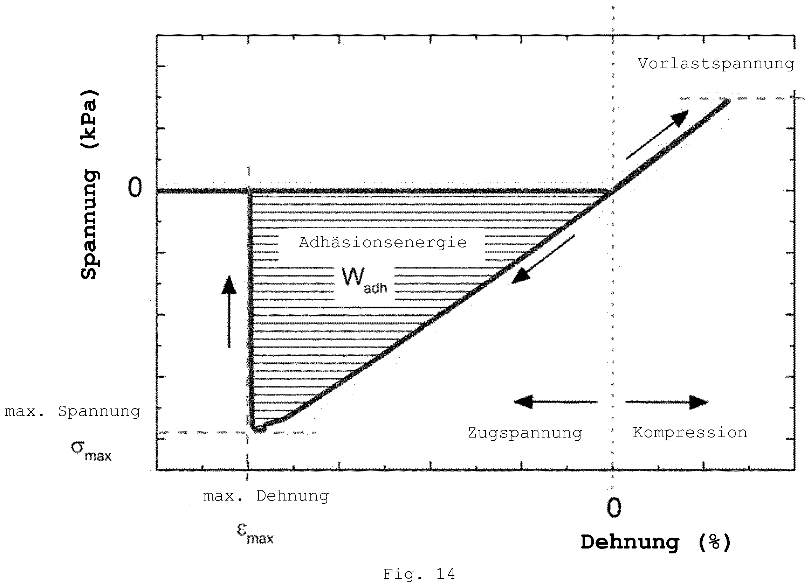

Die Adhäsionsversuche wurden mit einer Geschwindigkeit von 5 pm/s durchgeführt mit einem Glassubstrat als Oberfläche. Die Proben wurden nach Kontaktierung mit der Oberfläche bis zum Erreichen einer Vorlast senkrecht auf die Oberfläche zubewegt und dann bis zur vollständigen Ablösung wieder von der Oberfläche wegbewegt (Figur 14). Die dabei nötige Abziehkraft ist die Kraft, die zur vollständigen Ablösung benötigt wird. Allerdings ist auch eine bestimmte Kraft notwendig, um eine erste Ablösung der Kontaktfläche zu erreichen. Die dafür notwendige Kraft wurde ebenfalls untersucht.

Für jede Probe wurde die Vorlast in Schritten von 40 bis 150 mN erhöht und alle erhaltenen Abziehkräfte über alle Vorlasten gemittelt. Die Adhäsionsmessungen wurden an zwei Positionen des Substrats durchgeführt.

Die Ergebnisse der Berechnungen mit Kompositpillars mit ebener Phasengrenzfläche, d.h. parallel zur Kontaktfläche und senkrecht zur zentralen Achse des Kompositpillars, sind in Figur 6 gezeigt. Dabei zeigt Figur 6 a) den Einfluss der Verhältnisse des Elastizitätsmodule bei einer konstanten Dicke des oberen Bereichs ($L_2/L$=0,05). Die Normalspannung entlang der Kompositpillar/Substrat-Grenzfläche, normalisiert mit der Zugspannung ($\sigma_{22}/\sigma_A$), wird gegen den normalisierten Abstand zum Rand (r/D) aufgetragen. Es zeigt sich, dass ein Anstieg von $E_1/E_2$ von 1 bis $10^6$ zu einer Abnahme der Normalspannung am Rand führt, während gleichzeitig der Spannungswert im Zentrum des Pillars für einige $L_2/L$-Verhältnisse ansteigt und schließlich einen Maximalwert von ca. 0,3 erreicht. Jenseits eines Verhältnisses von 1000 ($E_1/E_2$) verändert sich das Spannungsverhalten für Kompositpillars mit einem Verhältnis $L_2/L$ von 0,25 bis 0,05, aber die Spannung an den Rändern nimmt noch weiter ab für eine Kompositpillar mit einem Verhältnis $E_1/E_2$ = $10^6$ und $L_2/L$ = 0,005. Im Vergleich zu der Lösung für einen konventionellen Vorsprung (gezeigt als gestrichelte Linie) weisen alle Kompositpillars eine geringere Spannung am Rand auf, auf Kosten einer höheren Spannung im Zentrum. Figur 6 b) zeigt den Einfluss der Dicke $L_2$ des weichen Materials für ein konstantes Verhältnis $E_1/E_2$ = $10^6$. Es zeigt sich, dass die Dicke $L_2$ einen großen Einfluss auf die berechnete Spannungsverteilung hat. Eine geringere Dicke reduziert die Spannung an den Rändern deutlicher und die Spannung im Zentrum steigt an, bis ein Wert von ungefähr 0,3 erreicht ist. Die Ergebnisse von Figur 6 a) und b) wurden gegen die asymptotische Spannungslösung von Gleichung 3 gefittet, um die Kalibrierungskoeffizienten $\tilde{a}$ für verschiedene Kombinationen von $E_1/E_2$ und $L_2/L$ zu finden. Die Ergebnisse sind in Figur 6 c) gezeigt.

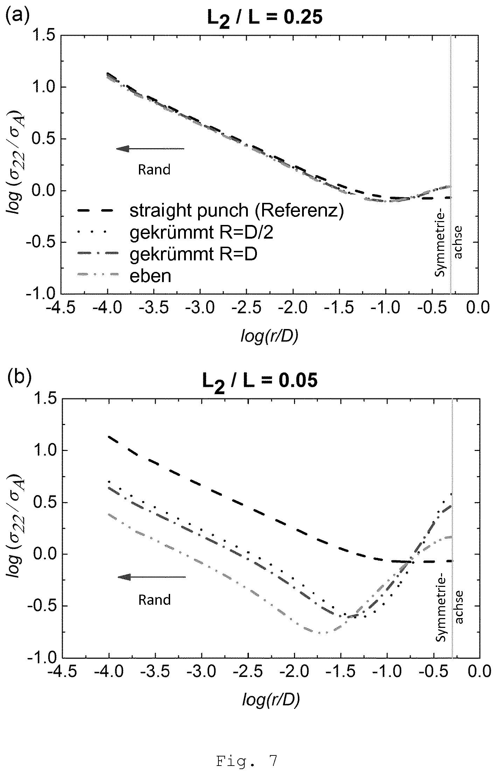

Für Kompositpillars mit einer gekrümmten Grenzfläche (R = D und R = D/2) sind zeigt Figur 7 die Ergebnisse für ein Verhältnis $E_1/E_2$ = 1000 bei $L_2/L$ = 0,25 und $L_2/L$=0,05. Es zeigt sich, dass für ein Verhältnis von $L_2/L$ = 0,25 der Einfluss der Phasengrenzfläche kaum feststellbar ist (Figur 7 a)). Für $L_2/L$=0,05, d.h. für eine dünnere Spitze, beeinflusst die Geometrie der Phasengrenzfläche sehr deutlich die Form und Höhe der Spannungsverteilung entlang der Grenzfläche (Figur 7 b)). Wenn der Radius der kugelförmig gekrümmten Grenzfläche erhöht wird, wird die Spannung im Zentrum erhöht wird. Während die Steigung aller Kurven zum Rand hin gleich ist, steigen sie zum Zentrum hin deutlich unterschiedlich an. Die Spannung am Rand ist für die ebene Phasengrenzfläche am geringsten, weshalb hierfür die größeren Adhäsionsspannungen ermittelt wurden im Vergleich zu den gekrümmten Phasengrenzflächen.

Die Adhäsionsspannung $S^l$ der Kompositpillars kann mit Hilfe von Gleichung 8 berechnet werden und mit Hilfe von Gleichung 9 auf die Adhäsionsspannung der Referenz normiert werden. Die Ergebnisse für verschiedene Kompositpillars sind in Figur 9 dargestellt.

Die Spannungsverteilung entlang der Kontaktfläche ist experimentell nicht direkt zugänglich, allerdings kann die Adhäsionsspannung aus der Abziehkraft geteilt durch Kontaktfläche berechnet werden. Um die Simulationen zu ergänzen, wurde die Adhäsion von den vorstehend beschriebenen Vorsprüngen (Referenzprobe und Kompositpillars mit ebener und gekrümmter (R= D/2) Phasengrenzfläche und jeweils zwei Verhältnisse $E_1/E_2$=2, bzw. 350) untersucht.

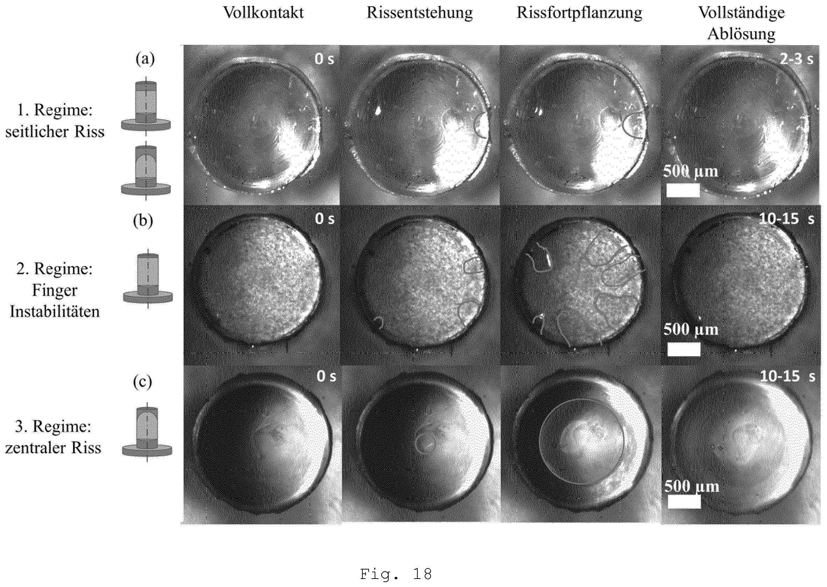

Diese Werte sind zusammen mit den Berechnungen in Figur 9 gezeigt. Die Abziehkräfte der Kompositpillars waren in der Regel größer als für die Referenzproben. Für beide unterschiedlichen Geometrien der Phasengrenzflächen stieg die gemessene Adhäsionsspannung mit abnehmendem $L_2/L$-Verhältnis an ($L_2/L$>0,06 für $E_1/E_2$=350 und $L_2/L$ >0,03 für $E_1/E_2$=2). Bei diesen Verhältnissen war die Adhäsion der Kompositpillars mit ebener Phasengrenzfläche höher als für Kompositpillars mit halbkugelförmig gekrümmter Phasengrenzfläche. Für diese Verhältnisse begann die Ablösung der Kontaktfläche immer am Rand und verursachte eine schnelle vollständige Ablösung (Figur 18). Daher konnten keine Unterschiede in der Kraft zum Beginn der Ablösung und der Kraft zur vollständigen Ablösung festgestellt werden. Für dünnere Spitzen mit kleinerem $L_2/L$-Verhältnis wurde ein anderer Mechanismus der Ablösung festgestellt, welcher besonders von der Geometrie der Grenzfläche abhängt. Für ebene Grenzflächen (Figur 18 c)) wurde unterhalb eines bestimmten Verhältnisses, welches vom Verhältnis der Elastizitätsmodule abhängt, ein Abfall der Adhäsionskraft festgestellt. Dabei bilden sich nun statt einer einzigen Ablösung am Rand, gleichzeitig mehrere Ablösungen am Rand, welche sich fingerförmig nach schnell nach innen fortpflanzen. Für Kompositpillars mit gekrümmten Grenzflächen kleinem $L_2/L$-Verhältnis (Figur 18 b)) wurde ein weiterer Mechanismus der Ablösung beobachtet. Dabei beginnt die Ablösung im Zentrum der Kontaktfläche und nimmt nur langsam zu, bis zu einem kritischen Durchmesser von ungefähr 0,6 D. Erst dann kommt es zur vollständigen Ablösung. Gezeigt durch die Pfeile in Figur 9 b) konnte daher für diese Kompositpillars höhere Abziehkräfte im Vergleich zu den nötigen Kräften zum Beginn der Ablösung beobachtet werden.

Unabhängig vom Mechanismus zeigen Kompositpillars bei abnehmendem $L_2/L$ Verhältnis eine stetige Zunahme der Adhäsion, anders als Kompositpillars mit ebener Grenzfläche. Die Ergebnisse zeigen eine gute Übereinstimmung mit den Simulationen, außer bei sehr dünnen Spitzen, wahrscheinlich, da das verwendete mathematische Modell von einem Beginn der Ablösung am Rand ausgeht.

Ausgehend von den Ergebnissen ist davon auszugehen, dass ein Verhältnis der Elastizitätsmodule von über 1000 keine weitere Zunahme der Adhäsion bewirkt. Eine Abnahme des $L_2/L$-Verhältnisses führt in der Regel zu einer Zunahme der Adhäsion, ebenso wie eine Zunahme des Verhältnisses der Elastizitätsmodule ($E_1/E_2$).

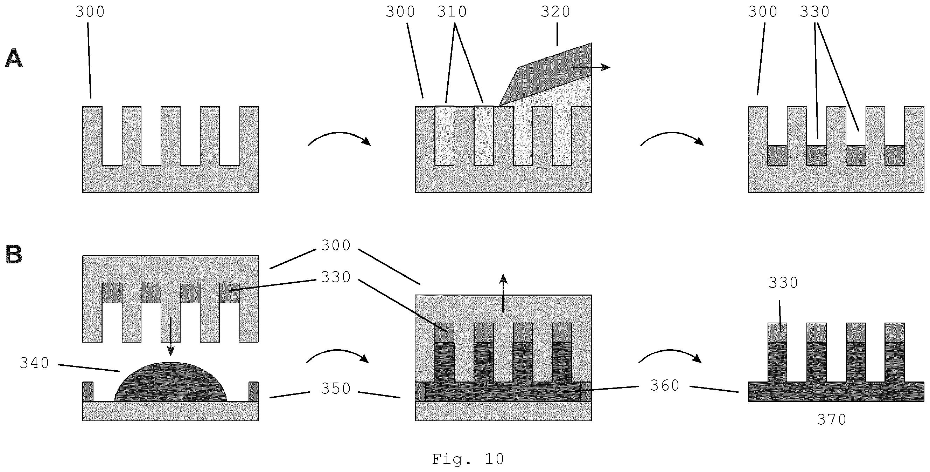

Figur 10 zeigt eine schematische Darstellung eines Verfahrens zur Herstellung einer erfindungsgemäß strukturierten Oberfläche. Die Sequenz A zeigt die Herstellung eines vorbereiteten Templats, welches eine Zusammensetzung für den Bereich für die Stirnflächen beinhaltet. Die Sequenz B zeigt die Fertigstellung der strukturierten Oberfläche.

Zunächst wird ein Templat 300 zur Abformung der strukturierten Oberfläche bereitgestellt. Bevorzugt weist das Templat eine inertisierte, bevorzugt fluorierte oder perfluorierte Oberfläche auf. So kann es beispielsweise aus perfluoriertem Polyether (PFPE) bestehen. Das Templat kann durch Abformen entsprechender Siliziummasterstrukturen erhalten werden.

In die Öffnungen des Templats wird eine Zusammensetzung 310 umfassend das Material für den Bereich mit geringem Elastizitätsmodul oder Zusammensetzung umfassend eine Vorstufe davon eingefüllt. Um eine eindeutige Menge einzufüllen, kann es vorteilhaft sein, die Öffnungen vollständig zu füllen und dann mit einem Abstreifer oder einem Rakel 320 die überschüssige Zusammensetzung abzustreifen. Die Zusammensetzung umfasst bevorzugt mindestens ein Lösungsmittel, welches in einem nächsten Schritt entfernt wird, bevorzugt durch verdunsten, beispielsweise unter Vakuum. Da die Zusammensetzung flüssig ist, bilden sich ein Meniskus und damit eine Krümmung der Oberfläche der Zusammensetzung in der Öffnung des Templats.

Die Zusammensetzung kann beispielsweise eine Lösung von Monomeren, wie Vorstufen für Silikone sein. Es kann sich auch um eine Lösung eines vernetzbaren Polyurethans, wie eines Polyurethan(meth)acrylats handeln. Als Lösungsmittel kommen vor allem flüchtige organische Lösungsmittel in Betracht, wie niedere Alkohole, Ether, Ester oder Alkane.

Gegebenenfalls kann die Zusammensetzung auch noch gehärtet werden. Durch die Abnahme an Volumen der eingebrachten Zusammensetzung durch Entfernung des Lösungsmittels und/oder Härtung erhält man am Boden der Öffnungen im Templat eine getrocknete/gehärtete Zusammensetzung 330.

Die Härtung kann abhängig von der verwendeten Zusammensetzung durch Erwärmen und/oder Bestrahlung geschehen.

Das so behandelte Templat dient nur als Vorlage zur Abformung der strukturierten Oberfläche, wobei sich die bereits in der Vorlage befindliche Zusammensetzung mit den anderen Zusammensetzungen für die anderen Bereiche verbindet. Dazu wird eine Zusammensetzung 340 umfassend das Material zur Bildung des Bereichs mit dem höheren Elastizitätsmodul oder eine Vorstufe davon auf ein Gegenstück 350 zum Templat aufgebracht und dann für die Abformung mit dem Templat kontaktiert. Danach wird die Zusammensetzung gehärtet. Dies kann auch die Härtung der anderen Bereiche umfassen. Es können auch mehrere Härtungsschritte durchgeführt werden. Man erhält eine gehärtete Zusammensetzung mit höherem Elastizitätsmodul. In der Abbildung wird auch gleichzeitig die Rückschicht, auf der die Vorsprünge angeordnet sind, durch das gleiche Material gebildet. Nach Entfernen aus dem Templat erhält man eine strukturierte Oberfläche 370 gemäß der Erfindung.

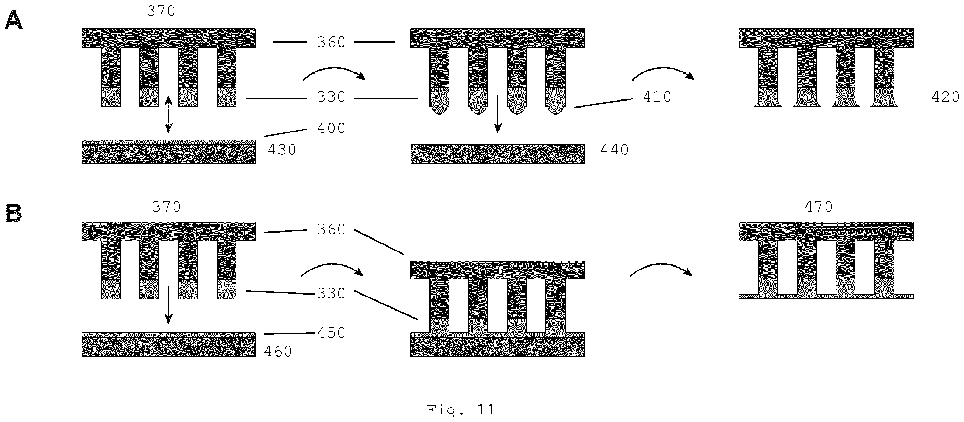

Figur 11 zeigt ein Verfahren zur Herstellung von Ausführungsformen der Erfindung. In Sequenz A wird die Herstellung von verbreiterten Stirnflächen gezeigt. Sequenz B zeigt die Herstellung von durch einen Film verbrückten Vorsprüngen.

Für die Herstellung von verbreiterten Stirnflächen wird ein Film einer Zusammensetzung eines Materials für die verbreiterten Stirnflächen 400 auf eine Oberfläche 430 aufgebracht. In diesen Flüssigkeitsfilm werden die Stirnflächen der strukturierten Oberfläche eingetaucht und wieder abgehoben. Dadurch bilden sich auf der Oberfläche der Stirnflächen Tropfen 410 der Zusammensetzung. Zur Herstellung der verbreiterten Stirnflächen werden diese Tropfen gegen eine weitere Oberfläche 460 gedrückt. Dabei kommt es zu einer Verbreiterung der Tropfen. Die so verformten Tropfen werden ausgehärtet. Man erhält eine strukturierte Oberfläche mit verbreiterten Stirnflächen 420. Erfindungsgemäß hat das Material für die verbreiterten Stirnflächen einen gleichen oder niedrigeren Elastizitätsmodul als das Material der Stirnflächen.

Für die Herstellung von verbrückten Vorsprüngen wird ein härtbarer Film 450 auf eine Oberfläche 460 aufgebracht. Das strukturierte Templat 370 wird mit den Stirnflächen in diesen Film getaucht und der Film gehärtet. Dabei kommt es zur Bildung eines Films und zur Verbindung des Films mit der strukturierten Oberfläche. Nach Ablösen von der Oberfläche wird eine strukturierte Oberfläche erhalten, deren Vorsprünge mit einem Film verbrückt sind.

Adhäsionsmessungen

Die Adhäsionsmessungen wurden mit einer Apparatur gemäß Kroner, E.; Blau, J.; Arzt E. An adhesion measurement setup for bioinspired fibrillar surfaces using flat probes. Review of Scientific Instruments 2012, 83 durchgeführt. Die Kompositpillar-Probe wurde dabei auf einen Glasträger aufgebracht und in einem mit hoher Präzision verschiebbaren und kippbaren Probenhalter befestigt. Die Kräfte wurden mit einer 3 N Kraftmessdose (Tedea-Huntleigh 1004, Vishay Precision Group, Basingstoke, UK) aufgenommen. Die Kraftmessdose war mit einem glatten, flachen und ausgerichteten Glasprüfkörper (Substrat) ausgestattet. Vor jeder Messung wurde das Substrat mit Ethanol gereinigt. Mit Hilfe eines Prismas wurde der Kontakt der Probe mit der Oberfläche beobachtet und die Probe ausgerichtet. Für die Messung wurde die Probe mit einer Geschwindigkeit von 5 pm/s auf das Substrat zubewegt. Figur 14 zeigt den üblichen Verlauf der Kraftmessung. Nach Kontakt wurde eine vorbestimmte (positive) Vorbelastung (Vorlastspannung) eingestellt und diese Kraft für eine bestimmte Zeit gehalten (Haltezeit). Danach wurde die Probe wieder von dem Substrat weg bewegt. Dabei wurde die (negative) Abzugsspannung gemessen. Die niedrigste gemessene Spannung ist die Haftspannung. Alle Messungen wurden mit einer optischen Kamera überwacht.

Nach der Messung wurden die Proben der Länge nach durchgeschnitten und die Dicke der einzelnen Bereich mit einem Lichtmikroskop (Genauigkeit +/- 30 $\mu$m) gemessen.

Figur 12 zeigt die Herstellung von makroskopischen Vorsprüngen (Pillars). Der Durchmesser aller Strukturen beträgt 2 mm und die Höhe etwa 4 mm, so dass ein Aspektverhältnis von 2 vorliegt. Alle Vorsprünge haben einen kreisförmigen Querschnitt. Die Symmetrieachse ist mit der gestrichelten Linie angedeutet.

Zunächst wurde der Pillar-Stamm aus PDMS gegossen (a). Im zweiten Schritt b) wird die Spitze mit einem anderen Material aufgefüllt. Für die flachen (601) und gekrümmten (602) Pillar (Radius 1 mm) wurden entsprechende Formen (621, 622) aus Aluminium mit einem flachen oder runden Bohrer hergestellt. (Die Formen wurden beschichtet, um einfacheres Herauslösen der Strukturen aus den Kavitäten zu ermöglichen.) Die Formen wurden mit dem ersten Prepolymer 610 (hier PDMS Sylgard 184, E-Modul ca. 2 MPa) gefüllt und entgast. Dann wurde das überschüssige Polymer mit einer Rasierklinge abgestreift, um eine flache Rückschicht mit konstanter Dicke zu ermöglichen, bevor die Proben bei 100°C auf einer Heizplatte für 30 min vernetzt wurden (630).

Die zuvor hergestellten Strukturen wurden im nächsten Schritt b) für 2 min im Sauerstoffplasma aktiviert, um die chemische Anbindung einer zweiten Polymerschicht zu ermöglichen. Für das Aufbringen der weichen, oberen Schicht wurden Aluminium Formen mit durchgängiger Bohrung mit einer hohen Passgenauigkeit verwendet (641, 642). Die flachen oder abgerundeten PDMS Stämme konnten so in die Formen gedrückt und von der Rückseite aus mit etwas Druck befestigt werden. Unterschiedliche Dicken der oberen Schicht können mit unterschiedlich tiefen Aluminiumformen eingestellt werden. Bei diesen Vorversuchen wurden auch Unterlegscheiben (650 im mittleren Bild in schwarz angedeutet) zum Einstellen der Dicke verwendet. Das Prepolymer 660 für den Bereich mit geringerem Elastizitätsmodul wurde nach dem Mischen in die Form gegossen und 1 min entgast. Anschließend wurde mit einer Rasierklinge 670 das überschüssige Polymer abgestreift und die Struktur mit einem Teflon-Substrat 680 bedeckt. Es erfolgte eine zweistündige Vernetzung 690 bei 75°C bevor der fertigen Pillar 691 und 692 vorsichtig entformt werden konnten. Die Pillar/Vorsprünge weisen einen Bereich mit hohem Elastizitätsmodul 697 und einen Bereich mit geringerem Elastizitätsmodul 695 auf, welche aneinander angrenzen und eine entsprechende Phasengrenzfläche 696 aufweisen. Dies kann, wie im Fall von Vorsprung 692, gekrümmt sein. Aufnahmen der hergestellten Vorsprünge und den Grenzflächen zeigt Figur 13.

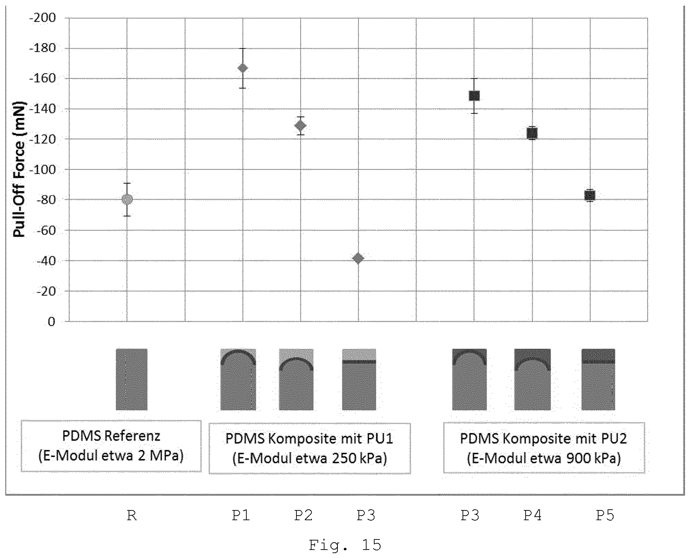

Figur 15 zeigt die mit den hergestellten Vorsprüngen gemessenen Adhäsionskräfte gegen ein flaches Glassubstrat. Als Referenz dient ein Vorsprung aus reinem PDMS. Es wurden Vorsprünge mit einem Bereich mit geringerem Elastizitätsmodul von 250 kPa (P1, P2, P3) und 900 kPa (P3, P4, P5) hergestellt. Der Bereich mit dem hohen Elastizitätsmodul war immer PDMS (2 MPa). Als Material für die Bereiche mit dem geringen Elastizitätsmodul wurden entsprechende Polyurethane verwendet. Die Proben P3 und P5 weisen eine zur Stirnfläche parallele Phasengrenzfläche der beiden Bereiche auf. Die Proben P1 und P2, bzw. P3 und P4 unterscheiden sich in der Dicke der Bereiche mit geringem Elastizitätsmodul. Es zeigt sich, dass die Vorsprünge mit einer geringeren Dicke, eine verbesserte Adhäsion aufweisen. Anscheinend ist bei diesen der positive Effekt der gekrümmten Phasengrenzfläche auf die Adhäsion stärker.

Für Proben mit glatter oder rauer Oberfläche wurde ein Glassubstrat mit zwei Bereichen verwendet. Ein Bereich mit geringer Rauheit ($R_a$=0,006 $\mu$m und $R_z$=0,041 $\mu$m) und ein Bereich mit höherer Rauheit ($R_a$=0,271 $\mu$m und $R_z$=2,174 $\mu$m). Diese Bereich werden in den Vergleichsmessungen als glatte, bzw. raue Oberfläche bezeichnet. Vor jeder Messung wurde das Substrat mit Ethanol gereinigt.

Für die Proben für die Messungen der Figuren 9, bzw. 17 bis 19 wurden folgende Materialien verwendet: Polyguss 74-41 (PU, PolyConForm GmbH, Duesseldorf, Germany) ist ein Zwei-Komponenten-Polyurethan, welches aus zwei Bestandteilen A und B hergestellt wird, welche in gleicher Menge zugegeben werden. Die Vorpolymerlösung wird unter Vakuum für 2 Minuten bei 2000 rpm in einem SpeedMixer (DAC600.2 VAC-P, Hauschild Engineering, Hamm, Germany) vermischt. Der erhaltene Polymer hat einen Elastizitätsmodul von ungefähr 900 kPa.

Polydimethylsiloxan (PDMS, Sylgard 184, Dow Corning, Midland, MI, USA) wurde in einem Mischungsverhältnis von 10 Anteilen (Gewicht) Basislösung und 1 Anteil Vernetzer verwendet. Die Vorpolymerlösung wurde unter Vakuum 5 Minuten bei 2000 rpm in einem SpeedMixer entgast. Das PDMS hat einen Elastizitätsmodul von ungefähr 2 MPa.

Poly(ethyleneglycol)dimethacrylat (PEGdma) mit einem mittlerem Molekulargewicht von 200 g/mol (Sigma-Aldrich, St. Louis, MO, USA) wurde mit dem Photoinitiator 2-Hydroxy-2-methylpropiophenon (Sigma-Aldrich, St. Louis, MO, USA) gemischt. Dazu wurden 2-Aminoethylmethacrylathydrochlorid (1 Gew.-%, Sigma-Aldrich, St. Louis, MO, USA) gegeben, um die Verbindung zwischen PU und PEGdma zu erhöhen. Das erhaltene Polymer hat einen Elastizitätsmodul von ungefähr 350 MPa.

Die Mikrostrukturen wurden gemäß dem Verfahren nach Figur 12 hergestellt. Im ersten Schritt wurden die Stämme der Kompositpillars in zwei vorgefertigten Aluminiumformen hergestellt. Die hergestellten Stämme haben einen kreisförmigen Durchmesser von 2 mm, eine Höhe von 4 mm und eine 1 mm dicke Basisschicht. Die Vorsprünge haben entweder eine flache Stirnfläche oder eine kugelförmig gekrümmte Stirnfläche mit einem Radius von 1 mm.

Abhängig vom zweiten Material der Vorsprünge wurde der Herstellungsprozess leicht verändert. Im Fall von PDMS wurde das Vorpolymer in die Form gefüllt, für 10 Minuten entgast und für 125 °C für 20 Minuten auf einer Heizplatte gehärtet. PEG-Vorpolymer wurde in die Form gefüllt, für 20 Minuten mit Stickstoff behandelt und dann mit UV-Licht für 300 s gehärtet (Omnicure S1500, Excelitas Technologies, Waltham, MA, USA).

Im zweiten Schritt wurden die hergestellten Strukturen in eine Aluminiumform mit zylindrischen Löchern mit einem Radius von 2 mm und einer Tiefe von 4 mm eingeführt. Um unterschiedliche Dicken des zweiten Bereichs, bzw. der Spitze zu erreichen wurden auf der Unterseite der Form Abstandshalter mit einer Dicke von 100 $\mu$m, 300 $\mu$m, bzw. 500 $\mu$m eingefügt. Diese liegen daher zwischen der Basisschicht und der Aluminiumform. Dadurch verlängert sich der obere Bereich der Kompositpillars entsprechend. Das PU Vorpolymer wurde auf die Vorsprünge in der Form aufgebracht und für 2 Minuten entgast. Danach wird das überstehende Polymer mit einer Rasierklinge entfernt. Auf die Oberseite der Form wurde eine Glasplatte mit einem Teflonfilm aufgebracht. Danach wurden die Strukturen bei Raumtemperatur für mindestens 16 Stunden gehärtet und die Kompositpillars aus der Form entfernt.

Für PDMS wurde die Oberfläche der Vorsprünge vor dem zweiten Schritt für 2 Minuten mit Sauerstoffplasma aktiviert (60% Leistung; PICO plasma system, Diener electronic, Ebhausen, Germany). Dies erlaubt die kovalente Bindung des PDMS mit dem PU der Stämme.

Für die Messungen der Figuren 9, bzw. 17 bis 19 wurde folgendes analoge Protokoll verwendet. Während der Messung wurden Probe mit den Vorsprüngen und Substrat aufeinander zubewegt, bis eine maximale Kraft, die Vorbelastung (Vorlastspannung; preload force), erreicht wurde. Diese Position (Auslenkung) wurde für eine bestimmte Zeit beibehalten (Haltezeit). Danach wurde die Probe wieder von der Oberfläche wegbewegt, bis sich die Vorsprünge von der Oberfläche ablösen. Für jede Probe wurde die Vorbelastung in ungefähr 5 Schritten von 40 auf 180 mN erhöht. Die Messung wurde außerdem an zwei unterschiedlichen Bereichen der Probe (glatt und rau) durchgeführt. Die Geschwindigkeit der Bewegung variierte von 2 bis 10 pm/s und die Haltezeit variierte von 0 bis 120 Sekunden.

Für die Messungen auf der glatten und rauen Oberfläche wurden die Haftspannungen der Proben für eine Vorbelastung von 50 und 150 mN ermittelt, da die Abziehkräfte mit der Vorbelastung zusammenhängen.

Um den Spannungsanstieg (strain rate) verschiedener Proben mit der PU-Vergleichsprobe vergleichen zu können, wurden verschiedene Geschwindigkeiten verglichen, abhängig vom Verhältnis der Elastizitätsmodule des Stamms und der Spitze. Für PDMS/PU-Kompositpillars und auch reine PU-Pillars wurden die Experimente bei 10 pm/s durchgeführt, während für PEGdma/PU-Kompositpillars 2 pm/s gewählt wurden. Diese Geschwindigkeiten führen zu einem ähnlichen Anstieg der Spannung mit der Zeit während der Messung.

Aus den aufgezeichneten Kraft/Auslenkungs-Daten wurde die Kraft zur Ablösung der Probe (die Ablösekraft $F_{adh}$) berechnet. Unter Verwendung der Kontaktfläche der Vorsprünge A und der Dicke der Spitze $h_0$, kann das aufgezeichnete Diagramm mit Hilfe der folgenden Gleichung in eine Spannungs-Dehnungskurve (stressstrain-Kurve) umgerechnet werden.

$$\varepsilon = \frac{d - d_0}{h_0} \quad \text{und} \tag{1}$$

$$\sigma = \frac{F}{A} \quad , \tag{2}$$

wobei $\varepsilon$ die Dehnung im Zentrum des weichen Bereichs ist, d ist die Auslenkung, $d_0$ ist die Auslenkung auf der Entspannungskurve, bei welcher die Kraft 0 ist, und $\sigma$ die Spannung in der Mitte. Da das Material des Stamms viel steifer ist, als das Material der Spitze, wird zur Vereinfachung angenommen, dass die Verformung der Vorsprünge nur in der weicheren Spitze stattfindet. Außerdem wurden die maximale Dehnung $\varepsilon_{max}$ und die maximale Spannung $\sigma_{max}$ ausgerechnet. Schließlich wurde aus diesen Daten die Adhäsionsenergie berechnet:

$$W_{adh} = h_0 * \int_0^{\varepsilon_{max}} \sigma(\varepsilon)\, d\varepsilon \quad . \tag{3}$$

Eine beispielhafte Messung zusammen mit den analysierten Parametern ist in Figur 14 dargestellt. Die Spannung und Dehnung für vollständige Ablösung $\sigma_{max}$ und $\varepsilon_{max}$ und die Fläche der Kurve $W_{adh}$ wurden analysiert und zwischen den Proben verglichen.

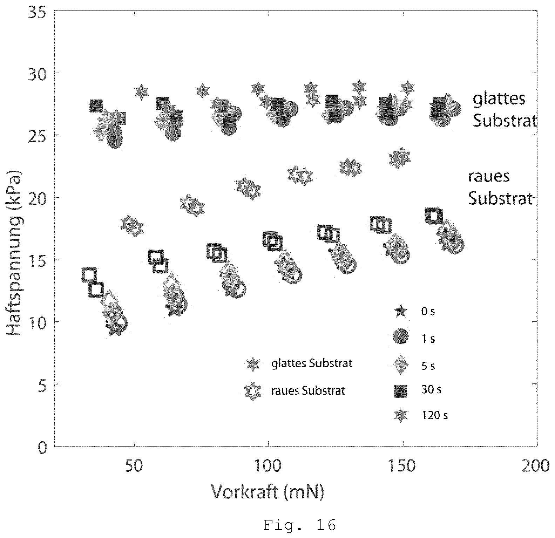

Die Figur 16 zeigt Messungen einer Referenzprobe aus Polyurethan bei unterschiedlichen Bedingungen (Vorbelastung; Rauheit der Oberfläche und Haltezeit). Das Diagramm zeigt die Abzugskräfte als Funktion der Vorbelastung bei unterschiedlichen Messbedingungen. Die PEGdma/PU und PDMS/PU Komposite weisen ein Verhältnis der Elastizitätsmodule von 350, bzw. 2 auf. Die Grenzfläche zwischen den Bereichen war entweder eben oder gekrümmt (Krümmungsradius ca. 1 mm), während die Dicke der Spitze (des weicheren Bereichs) zwischen 30 und 500 $\mu$m lag. Strukturen aus reinem PU wurden hergestellt und als Referenz verwendet. Während des Vernetzens kam es zu einer leichten Verringerung der Fläche durch Schrumpfung, wobei diese für alle Proben vergleichbar ist. Der Einfluss von Substrat, Vorlast und Haltezeit für PU-Vergleichsproben ist in den Figur 16 dargestellt. Die Messungen wurden bei konstanter Geschwindigkeit von 10 $\mu$m/s durchgeführt, wobei die Haltezeit zwischen 0 und 120 s variiert wurde.

Im Allgemeinen ist die Adhäsion an glatten Oberflächen höher und weniger abhängig von der Vorlast. Auf rauen Oberflächen gibt es eine starke Abhängigkeit von der Vorlast. An glatten Oberflächen hat die Haltezeit nur einen geringeren Einfluss auf die Abziehkraft. An rauen Oberflächen führt längere Haltezeit zu höheren Abziehkräften.

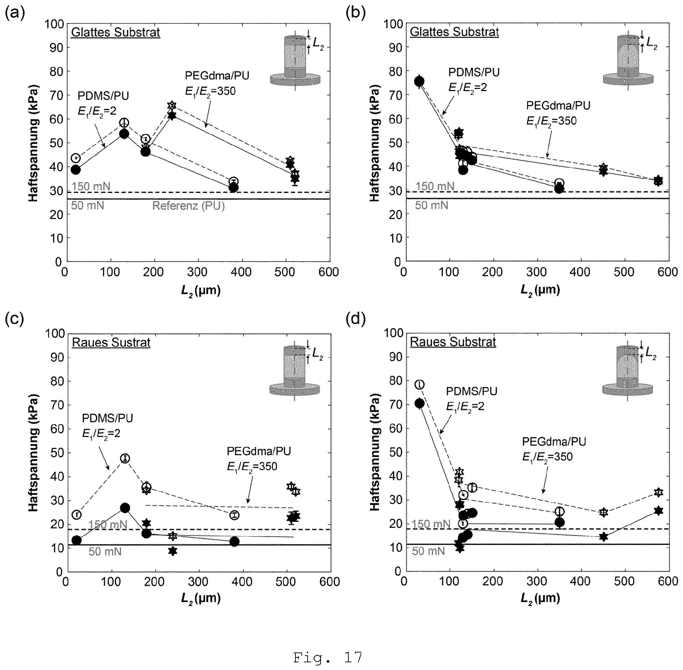

Figur 17 zeigt Adhäsionsmessungen mit Kompositvorsprüngen mit ebenen und gekrümmten Grenzflächen mit variierender Dicke des oberen Bereichs (tip). Es wurden verschiede Kombinationen von Material für Spitze und Stamm der Vorsprünge untersucht: Stamm aus PDMS und Spitze aus PU (PDMS/PU); Stamm aus PEGdma mit Spitze aus PU (PEGdma/PU), sowie Vorsprünge aus reinem PU als Referenz. Alle Messungen wurden mit 0 s Haltezeit und einer Geschwindigkeit von 10 $\mu$m/s (PU Referenz und PDMS/PU), bzw. 2 $\mu$m/s (PEGdma/PU). Die horizontalen Linien zeigen die durchschnittliche Adhäsion der Referenzprobe. Die Anpresskraft variiert jeweils zwischen 50 mN (durchgezogen) und 150 mN (gestrichelt). Dabei zeigen a) und b) die Messungen auf einer glatten Oberfläche und c) und d) auf einer rauen Oberfläche. Es zeigt sich für Kompositpillar mit ebener Phasengrenzfläche, dass auf glatter Oberfläche die Abziehkraft mit zunehmend dünner Spitze zu einem Maximum ansteigt und dann wieder abfällt (Figur 17 a)). Auf rauen Oberflächen zeigen die Kompositpillars mit ebener Phasengrenzfläche eine deutliche Verbesserung der Abziehkraft in Abhängigkeit von der Dicke des oberen Bereichs (Figur 20 c)). Es zeigt sich für Kompositpillar mit gekrümmter Phasengrenzfläche, dass auf glatter Oberfläche die Haftspannung mit zunehmend dünner Spitze zu einem ansteigt (Figur 17 b)). Auf rauen Oberflächen zeigen die Kompositpillars mit gekrümmter Phasengrenzfläche eine deutliche Verbesserung der Abziehkraft in Abhängigkeit von der Dicke des oberen Bereichs (Figur 20 d)). Auf rauen Oberflächen wird die Haftspannung durch Erhöhen der Vorlast stärker erhöht als auf glatten Oberflächen. Kompositpillar mit gekrümmter Phasengrenzfläche weisen eine zentrale Erstablösung ("center crack") bei Vorsprüngen mit sehr dünnem oberen Bereich auf. Auf glatter Oberfläche steigt die nötige Abziehkraft mit abnehmender Dicke des oberen Bereichs stetig an. Ein größeres Verhältnis der beiden Elastizitätsmodule erhöht ebenfalls die nötige Abziehkraft. Bei den dünnsten Dicken konnte eine Verdreifachung der Abziehkraft gemessen werden im Vergleich zur PU-Referenz. Auf rauer Oberfläche zeigen große Schichtdicken eine leicht verbesserte Adhäsion. Mit abnehmender Dicke steigt die Abziehkraftkraft an. Mit der dünnsten gemessene Probe konnte eine Verfünffachung der Abziehkraft gemessen werden. Ein geringeres Verhältnis der Elastizitätsmodule führt zu besseren Ergebnissen.

Figur 18 zeigt optische Mikroskopieaufnahmen von Ablösungsmustern (crack pattern), gemessen mit eine Geschwindigkeit 2 μm/s. Die Figuren zeigen die Kontaktfläche der Stirnflächen der Vorsprünge auf der Oberfläche, sowie von links nach rechts die Entwicklung der Ablösung des Vorsprungs von der Oberfläche. Die abgelösten Bereiche sind mit Linien umrandet. Dabei zeigt das erste Bild in jeder Reihe jeweils die Stirnfläche bei vollständigem Kontakt. Das zweite Bild zeigt den Beginn der Ablösung (crack initiation), welche sich im dritten Bild fortsetzt (crack propagation) bis hin zur vollständigen Ablösung (full detachment) im vierten Bild. Ab Beginn der Reihe ist jeweils der Aufbau der Vorsprünge schematisch dargestellt. Die Zeitangabe gibt die Zeit zur vollständigen Ablösung an. Bei Vorsprüngen mit dickerem oberem Bereich (Spitze) (gezeigt in a)) kommt es bei gekrümmter und ebener Grenzfläche zu einem Beginn der Ablösung am Rand der Kontaktfläche (edge crack). Die Ablösung geschieht auf der Skala von Sekunden mit einer geringen kritischen Ablösungsfläche (critical crack size). Vorsprünge mit gekrümmter Grenzfläche und dünnem oberen Bereich (gezeigt in b)) zeigen dagegen einen Beginn der Ablösung im Zentrum der Kontaktfläche. Dabei dauert es bis zur vollständigen Ablösung ca. 10 Sekunden.

Bei Vorsprüngen mit ebener Grenzfläche und dünner Spitze (gezeigt in c)) beginnt die Ablösung mit der Ausbildung von fingerförmigen abgelösten Bereichen an mehreren Stellen gleichzeitig. Auch dort dauert die Ablösung ca. 10 Sekunden.

Insgesamt konnten drei unterschiedliche Ablösungsmechanismen beobachtet werden. Unabhängig von der Form der Grenzfläche zeigen Vorsprünge mit dickerem oberem Bereich oder PU-Referenzproben den Beginn der Ablösung am Rand der Kontaktfläche (edge crack). Dabei formt sich eine Ablösung am Rand der Kontaktfläche, und wächst in Richtung des Zentrums und führt dann zur spontanen vollständigen Ablösung. Für Vorsprünge mit dünnerem oberem Bereich hängt der Mechanismus von der Geometrie der Grenzfläche ab. Bei gekrümmter Grenzfläche kommt es zunächst zur Ablösung in der Mitte der Kontaktfläche. Die kreisförmige Ablösung bildet sich spontan und vergrößert sich dann mit zunehmender Dehnung langsam in Richtung des Rands. Bei einer kritischen Größe der Ablösung kommt es dann zur plötzlichen Ablösung. Die abgelöste Fläche kann größer sein, als die noch in Kontakt befindliche Fläche, ehe es zur Ablösung kommt. Bei Vorsprüngen mit flacher Grenzflächengeometrie und geringer Dicke der Spitze kommt es dagegen zur gleichzeitigen Ausbildung von mehreren fingerförmigen abgelösten Flächen, welche sich radial nach innen vergrößern, ehe es zur vollständigen Ablösung kommt.

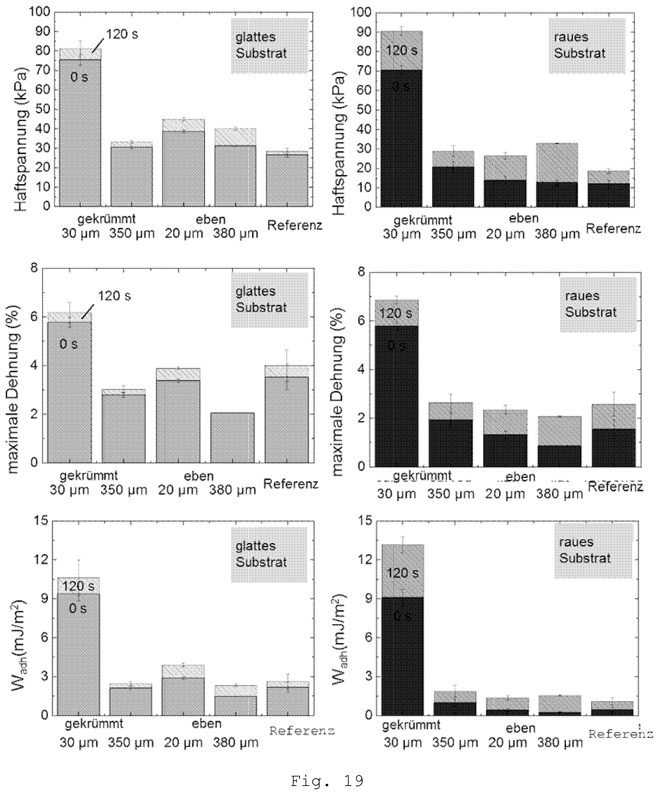

Figur 19 zeigt charakteristische Parameter, wie die Haftspannung, $\sigma_{max}$, die maximale Dehnung der Vorsprünge bis zur Ablösung, $\varepsilon_{max}$, sowie die Adhäsionsenergie, $W_{adh}$, für die Beschreibung des Adhäsionsverhaltens von Kompositpillar mit dicker und dünner Spitze sowie ebener und gekrümmter Phasengrenzfläche im Vergleich zur PU Referenz auf glatter und rauer Oberfläche. Die Werte wurden für 0 und 120 s Haltezeit ermittelt. Es zeigt sich, dass erfindungsgemäße Vorsprünge vor allem mit dünnen Spitzen für alle Parameter deutlich besser sind, als die PU Referenz. Insbesondere ist die Haftung auf rauen Oberflächen und glatten Oberflächen vergleichbar. Wie bereits aus den vorstehend gezeigten Messungen ersichtlich, sind die Adhäsionsenergie $W_{adh}$ und auch die Adhäsionsspannung $\sigma_{max}$ der Proben viel höher als für PU-Referenzproben auf beiden Substraten. Außerdem ist die Adhäsionsspannung auf beiden Substraten vergleichbar hoch, während sie für PU-Referenzproben ungefähr um die Hälfte abnimmt (Figur 19 oben). Auch für die Adhäsionsenergie ist der Trend ähnlich. Die Kompositpillars ist deutlich besser als die PU-Referenz und die Adhäsionsenergie ist auf rauer Oberfläche sogar noch etwas höher als auf glatter Oberfläche (Figur 19 Mitte). Die maximale Dehnung $\varepsilon_{max}$ ist ebenfalls auf beiden Substraten deutlich höher. Dies zeigt, dass die Kompositpillars eine gute Bindung an die Oberfläche aufweisen und deutlich stärker verformbar sind, ehe es zu Ablösung kommt, obwohl das effektive Elastizitätsmodul viel höher ist, aufgrund des deutlich steiferen Stamms der Vorsprünge.


Bezugszeichen


100    Vorsprung
120    Stirnfläche
130    Bereich mit geringerem Elastizitätsmodul

| 140 | Phasengrenzfläche |
| 150 | Bereich mit höherem Elastizitätsmodul |
| 160 | Oberfläche / Backinglayer / Rückschicht |
| 170 | Oberfläche zur Adhäsion |
| 300 | Templat für die strukturierte Oberfläche |
| 310 | Zusammensetzung für Bereich mit geringerem Elastizitätsmodul |
| 320 | Abstreifer / Rakel |
| 330 | getrocknete/gehärtete Zusammensetzung |
| 340 | Zusammensetzung für Bereich mit höherem Elastizitätsmodul |
| 350 | Gegenstück zum Templat |
| 360 | gehärtete Zusammensetzung |
| 370 | strukturierte Oberfläche |
| 400 | Film einer Zusammensetzung für die verbreiterten Stirnflächen |
| 410 | Tropfen |
| 420 | strukturierte Oberfläche mit verbreiterten Stirnflächen |
| 430 | Oberfläche |
| 440 | Oberfläche |
| 450 | Härtbarer Film |
| 460 | Oberfläche |
| 470 | strukturierte Oberfläche mit durch einen Film verbrückten Vorsprüngen |
| 500 | Vorsprung |
| 502 | Stirnfläche |
| 504 | Grundfläche |
| 506 | Überlappungsbereich |
| 601 | Vorsprung mit flacher Stirnfläche |
| 602 | Vorsprung mit gekrümmter Stirnfläche |
| 610 | Vernetzbare Zusammensetzung |
| 621 | Form für Vorsprung mit flacher Stirnfläche |
| 622 | Form für Vorsprung mit gekrümmter Stirnfläche |
| 630 | Vernetzen |
| 641 | Form mit durchgängiger Bohrung |
| 642 | Form mit durchgängiger Bohrung |
| 650 | Unterlegscheibe (Dicke ca. 500 $\mu$m) |
| 660 | Vernetzbare Zusammensetzung |
| 670 | Rasierklinge / Rakel |
| 680 | Teflon-Substrat |
| 690 | Vernetzen |
| 691 | Vorsprung mit zwei Bereichen und ebener Phasengrenzfläche |
| 692 | Vorsprung mit zwei Bereichen und gekrümmter Phasengrenzfläche |
| 695 | Bereich mit geringem Elastizitätsmodul |
| 696 | Phasengrenzfläche |
| 697 | Bereich mit hohem Elastizitätsmodul |

zitierte Literatur

Bae, W.G., Kim, D., Kwak, M.K., Ha, L., Kang, S.M. & Suh, K.Y. (2013a). Enhanced skin adhesive patch with modulus-tunable composite micropillars. Adv. Healthc. Mater., 2, 109-113

Kroner, E.; Blau, J.; Arzt E. An adhesion measurement setup for bioinspired fibrillar surfaces using flat probes. Review of Scientific Instruments 2012, 83

Akisanya, A.R., Fleck, N.A., 1997. Interfacial cracking from the freeedge of a long bi-material strip. International Journal of Solids and Structures 34, 1645-1665

Khaderi, S.N., Fleck, N.A., Arzt, E., McMeeking, R.M., 2015. Detachment of an adhered micropillar from a dissimilar substrate. Journal of the Mechanics and Physics of Solids 75, 159-183

WO 03/099951 A2

**Patentansprüche**

1. Strukturierte Oberfläche eines Festkörpers, wobei die Oberfläche eine Strukturierung aufweist, die eine Vielzahl von Vorsprüngen umfasst, die mindestens jeweils einen Stamm aufweisen mit einer von der Oberfläche wegweisende Stirnfläche umfassen, **dadurch gekennzeichnet, dass** der Stamm in Längsrichtung mindestens zwei Bereiche mit unterschiedlichem Elastizitätsmodul umfasst, wobei mindestens zwei der Bereiche aneinander angrenzen und eine Phasengrenzfläche bilden, wobei die Phasengrenzfläche eine Krümmung aufweist und das Verhältnis der minimalen senkrechten Dicke des Bereichs umfassend die Stirnfläche im Verhältnis zur Höhe des Vorsprungs weniger als 0,5 beträgt.

2. Strukturierte Oberfläche nach Anspruch 1, **dadurch gekennzeichnet, dass** die Phasengrenzfläche nicht parallel zur Stirnfläche des jeweiligen Vorsprungs ist.

3. Strukturierte Oberfläche nach Anspruch 1 oder 2, **dadurch gekennzeichnet, dass** die Phasengrenzfläche eine konvexe Krümmung in Richtung der Stirnfläche aufweist.

4. Strukturierte Oberfläche nach einem der Ansprüche 1 bis 3, **dadurch gekennzeichnet, dass** die Vorsprünge ein Aspektverhältnis von mindestens 3 aufweisen.

5. Strukturierte Oberfläche nach einem der Ansprüche 1 bis 4, **dadurch gekennzeichnet, dass** der Elastizitätsmodul der Bereiche des Vorsprungs zur Stirnfläche hin abnimmt.

6. Strukturierte Oberfläche nach einem der Ansprüche 1 bis 5, **dadurch gekennzeichnet, dass** das Verhältnis der minimalen senkrechten Dicke des Bereichs umfassend die Stirnfläche im Verhältnis zur Höhe des Vorsprungs weniger als 0,3 beträgt.

7. Strukturierte Oberfläche nach einem der Ansprüche 1 bis 6, **dadurch gekennzeichnet, dass** die Vorsprünge durch einen Film verbunden sind.

8. Strukturierte Oberfläche nach einem der Ansprüche 1 bis 7, **dadurch gekennzeichnet, dass** die Vorsprünge verbreiterte Stirnflächen aufweisen.

9. Verfahren zur Herstellung einer strukturierten Oberfläche eines Festkörpers nach einem der Ansprüche 1 bis 8, wobei die Oberfläche eine Strukturierung aufweist, die eine Vielzahl von Vorsprüngen umfasst, die mindestens jeweils einen Stamm aufweisen mit einer von der Oberfläche wegweisende Stirnfläche umfassen, wobei der Stamm in Längsrichtung mindestens einen Bereich mit geringerem Elastizitätsmodul und mindestens einen Bereich mit höherem Elastizitätsmodul umfasst, umfassend folgende Schritte:

   a) Bereitstellung eines Templats für die strukturierte Oberfläche;
   b) Herstellen einer Zusammensetzung umfassend das Material für die Stirnflächen der Oberfläche;
   c) Einbringen der Zusammensetzung in das Templat unter Ausbildung eines Meniskus;
   d) gegebenenfalls vollständige oder anteilige Härtung der Zusammensetzung.
   e) Einbringen des Materials für die weiteren Bereiche in das Templat;
   f) Härtung der Zusammensetzungen und/oder aller Zusammensetzungen;
   g) Ablösung der strukturierten Oberfläche aus dem Templat.

10. Verbund von zwei Körpern, wobei die Schnittstelle eine strukturierte Oberfläche nach einem der Ansprüche 1 bis 8 aufweist.

**Claims**

1. A structured surface of a solid body, wherein the surface has a structuring which comprises a large number of projections which each have at least one stem with an end face pointing away from the surface, **characterized in that** the stem in the longitudinal direction comprises at least two regions with different elasticity modulus, wherein at least two of the regions adjoin one another and form a phase boundary, wherein the phase boundary has a curvature and the ratio of the minimum vertical thickness of the region comprising the end face relative to the height of the projection is less than 0.5.

2. The structured surface as claimed in claim 1, **characterized in that**
the phase boundary is not parallel to the end face of the respective projection.

3. The structured surface as claimed in claim 1 or 2, **characterized in that**
the phase boundary has a convex curvature in the direction of the end face.

4. The structured surface as claimed in one of claims 1 to 3, **characterized in that**
the projections have an aspect ratio of at least 3.

5. The structured surface as claimed in one of claims 1 to 4, **characterized in that**
the elasticity modulus of the regions of the projection decreases towards the end face.

6. The structured surface as claimed in one of claims 1 to 5, **characterized in that**
the ratio of the minimum vertical thickness of the region comprising the end face relative to the height of the projection is less than 0.3.

7. The structured surface as claimed in one of claims 1 to 6, **characterized in that**
the projections are connected by a film.

8. The structured surface as claimed in one of claims 1 to 7, **characterized in that**
the projections have broadened end faces.

9. A method for the production of a structured surface of a solid body according to one of the claims 1 to 8, wherein the surface has a structuring which comprises a large number of projections, which each comprise at least one stem with an end face pointing away from the surface, wherein the stem in the longitudinal direction comprises at least one region with lower elasticity modulus and at least one region with higher elasticity modulus, comprising the following steps:

a) providing a template for the structured surface;
b) producing a composition comprising the material for the end faces of the surface;
c) introducing the composition into the template, wherein a meniscus is formed;
d) optionally completely or partially curing the composition.
e) introducing the material for the further regions into the template;
f) curing the compositions and/or all compositions;
g) detaching the structured surface from the template.

10. A combination of two bodies, wherein the interface has a structured surface as claimed in one of claims 1 to 8.

**Revendications**

1. Surface structurée d'un corps solide, la surface présentant une structuration qui comprend une pluralité de protubérances, qui présentent au moins chacune une tige avec une surface frontale détournée de la surface, **caractérisée en ce que**
la tige comprend dans la direction longitudinale au moins deux zones ayant un module d'élasticité différent, au moins deux des zones étant adjacentes l'une à l'autre et formant une interface de phases, l'interface de phase présentant une courbure et le rapport entre l'épaisseur perpendiculaire minimale de la zone comprenant la surface frontale et la hauteur de la protubérance étant inférieur à 0,5.

2. Surface structurée selon la revendication 1, **caractérisée en ce que** l'interface de phases n'est pas parallèle à la surface frontale de la protubérance respective.

3. Surface structurée selon la revendication 1 ou 2, **caractérisée en ce que** l'interface de phases présente une courbure convexe en direction de la surface frontale.

4. Surface structurée selon l'une quelconque des revendications 1 à 3, **caractérisée en ce que** les protubérances présentent un rapport de longueur d'au moins 3.

5. Surface structurée selon l'une quelconque des revendications 1 à 4, **caractérisée en ce que** le module d'élasticité des zones de la protubérance diminue vers la surface frontale.

6. Surface structurée selon l'une quelconque des revendications 1 à 5, **caractérisée en ce que** le rapport entre l'épaisseur perpendiculaire minimale de la zone comprenant la surface frontale et la hauteur de la protubérance est inférieur à 0,3.

7. Surface structurée selon l'une quelconque des revendications 1 à 6, **caractérisée en ce que** les protubérances sont reliées par un film.

8. Surface structurée selon l'une quelconque des revendications 1 à 7, **caractérisée en ce que** les protubérances présentent des surfaces frontales élargies.

9. Procédé de fabrication d'une surface structurée d'un corps solide selon l'une quelconque des revendications 1 à 8, dans lequel la surface présente une structuration qui comprend une pluralité de protubérances, qui présentent au moins chacune une tige avec une surface frontale détournée de la surface, la tige comprenant dans la direction longitudinale au moins une zone ayant un module d'élasticité plus faible et au moins une zone ayant un module d'élasticité plus élevé, comprenant les étapes suivantes :

   a) la préparation d'un modèle pour la surface structurée ;
   b) la fabrication d'une composition comprenant le matériau pour les surfaces frontales de la surface ;
   c) l'introduction de la composition dans le modèle avec formation d'un ménisque ;
   d) éventuellement le durcissement complet ou partiel de la composition ;
   e) l'introduction du matériau pour les zones supplémentaires dans le modèle ;
   f) le durcissement des compositions et/ou de toutes les compositions ;
   g) le décollement de la surface structurée du modèle.

10. Composite de deux corps, dans lequel la jonction comprend une surface structurée selon l'une quelconque des revendications 1 à 8.

Fig. 1

Fig. 2

Fig. 3

Fig. 4

Fig. 5

Fig. 6

24

(a)

**L$_2$ / L = 0.25**

(b)

**L$_2$ / L = 0.05**

Fig. 7

Fig. 8

Fig. 9

Fig. 10

Fig. 11

Fig. 12

ebene
Phasengrenzfläche

halkugelförmige
Phasengrenzfläche

2 mm

1 mm

Fig. 13

EP 3 271 435 B1

Fig. 14

Fig. 15

Fig. 16

Fig. 17

Fig. 18

Fig. 19

Fig. 20

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 03099951 A2

**In der Beschreibung aufgeführte Nicht-Patentliteratur**

- **BAE, W.G. ; KIM, D. ; KWAK, M.K. ; HA, L. ; KANG, S.M. ; SUH, K.Y.** Enhanced skin adhesive patch with modulus-tunable composite micropillars. *Adv. Healthc. Mater.,* 2013, vol. 2, 109-113
- **AKISANYA, A.R. ; FLECK, N.A.** Interfacial cracking from the freeedge of a long bi-material strip. *International Journal of Solids and Structures,* 1997, vol. 34, 1645-1665
- **KHADERI, S.N. ; FLECK, N.A. ; ARZT, E. ; MC-MEEKING, R.M.** Detachment of an adhered micropillar from a dissimilar substrate. *Journal of the Mechanics and Physics of Solids,* 2015, vol. 75, 159-183
- **KRONER, E. ; BLAU, J. ; ARZT E.** An adhesion measurement setup for bioinspired fibrillar surfaces using flat probes. *Review of Scientific Instruments,* 2012, 83
- **KHADERI, S.N. ; FLECK, N.A. ; ARZT, E. ; MC-MEEKING, R.M.** Detachment of an adhered micropillar from a dissimilar substrate. *Journal of the Mechanics and Physics of Solids,* 2015, vol. 75